(19) Europäisches Patentamt
European Patent Office
Office européen des brevets

(11) **EP 4 546 884 A1**

(12) **EUROPEAN PATENT APPLICATION**
published in accordance with Art. 153(4) EPC

(43) Date of publication:
**30.04.2025 Bulletin 2025/18**

(21) Application number: **23830502.3**

(22) Date of filing: **30.06.2023**

(51) International Patent Classification (IPC):
***H04W 52/02*** (2009.01)

(52) Cooperative Patent Classification (CPC):
**H04W 52/02; Y02D 30/70**

(86) International application number:
**PCT/CN2023/104625**

(87) International publication number:
**WO 2024/002339 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.07.2022 CN 202210775699**

(71) Applicant: **Vivo Mobile Communication Co., Ltd.
Dongguan, Guangdong 523863 (CN)**

(72) Inventor: **LIU, Xuanbing
Dongguan, Guangdong 523863 (CN)**

(74) Representative: **Murgitroyd & Company
165-169 Scotland Street
Glasgow G5 8PL (GB)**

(54) **WAKE-UP SIGNAL MONITORING METHOD AND APPARATUS, ELECTRONIC DEVICE, NETWORK DEVICE AND MEDIUM**

(57) This application pertains to the field of communication technologies, and discloses a wakeup signal monitoring method and apparatus, an electronic device, a network device, and a medium. The wakeup signal monitoring method in embodiments of this application includes: receiving, by a first terminal, a configuration parameter from a network device, where the configuration parameter is used to configure a parameter for monitoring a wakeup signal; and monitoring, by the first terminal, a target wakeup signal based on the configuration parameter, where the target wakeup signal is used to wake up or page the first terminal. The configuration parameter includes at least one of the following: a configuration parameter corresponding to a preamble; a configuration parameter of payload data; a time domain resource of the wakeup signal; a frequency domain resource of the wakeup signal; a transmission period parameter of the wakeup signal; an identity of a target terminal group to which the first terminal belongs; the number of terminal groups; a parameter of terminal information carried by the preamble; and a parameter of terminal information carried by the payload data.

FIG. 2

**Description**

This application claims priority to Chinese Patent Application No. 202210775699.3, filed with the China National Intellectual Property Administration on July 1, 2022 and entitled "WAKE-UP SIGNAL MONITORING METHOD AND APPARATUS, ELECTRONIC DEVICE, NETWORK DEVICE, AND MEDIUM", which is incorporated herein by reference in its entirety.

**TECHNICAL FIELD**

This application pertains to the field of communication technologies, and specifically relates to a wakeup signal monitoring method and apparatus, an electronic device, a network device, and a medium.

**BACKGROUND**

Currently, a terminal may first control a main communication module of the terminal to be in a sleep state, and monitor, by using a low-power receiving module of the terminal, a wakeup signal (Wake Up Signal, WUS) sent by a network device, and then control, only in a case that the WUS is detected, the main communication module to be in a working state, and receive, by using the main communication module, a paging message on a paging occasion (Paging Occasion, PO) associated with the WUS, to achieve an objective of reducing power consumption of the terminal.

However, when the network device pages a target terminal, the network device sends a WUS to a plurality of terminals. Therefore, a case that the network device does not page the target terminal, but the target terminal controls a main communication module to be in a working state to receive a paging message may occur. Consequently, power consumption of the terminal is high.

**SUMMARY**

Embodiments of this application provide a wakeup signal monitoring method and apparatus, an electronic device, a network device, and a medium to resolve a problem that power consumption of a terminal is high.

According to a first aspect, a wakeup signal monitoring method is provided and applied to a first terminal. The method includes: receiving, by the first terminal, a configuration parameter from a network device, where the configuration parameter is used to configure a parameter for monitoring a wakeup signal; and monitoring, by the first terminal, a target wakeup signal based on the configuration parameter, where the target wakeup signal is used to wake up or page the first terminal. The configuration parameter includes at least one of the following: a configuration parameter corresponding to a preamble; a configuration parameter of payload data; a time domain resource of the wakeup signal; a frequency domain resource of the wakeup signal; a transmission period parameter of the wakeup signal; an identity of a target terminal group to which the first terminal belongs; the quantity of terminal groups; a parameter of terminal information carried by the preamble; and a parameter of terminal information carried by the payload data.

According to a second aspect, a wakeup signal monitoring apparatus is provided. The wakeup signal monitoring apparatus includes a receiving module and a monitoring module. The receiving module is configured to receive a configuration parameter from a network device, where the configuration parameter is used to configure a parameter for monitoring a wakeup signal. The monitoring module is configured to monitor a target wakeup signal based on the configuration parameter received by the receiving module, where the target wakeup signal is used to wake up or page the wakeup signal monitoring apparatus. The configuration parameter includes at least one of the following: a configuration parameter corresponding to a preamble; a configuration parameter of payload data; a time domain resource of the wakeup signal; a frequency domain resource of the wakeup signal; a transmission period parameter of the wakeup signal; an identity of a target terminal group to which a first terminal belongs; the quantity of terminal groups; a parameter of terminal information carried by the preamble; and a parameter of terminal information carried by the payload data.

According to a third aspect, a wakeup signal monitoring method is provided and is applied to a network device. The method includes: sending, by the network device, a configuration parameter to a first terminal. The configuration parameter is used by the first terminal to configure a parameter for monitoring a wakeup signal, so that the first terminal monitors a target wakeup signal based on the configuration parameter, where the target wakeup signal is used to wake up or page the first terminal. The configuration parameter includes at least one of the following: a configuration parameter corresponding to a preamble; a configuration parameter of payload data; a time domain resource of the wakeup signal; a frequency domain resource of the wakeup signal; a transmission period parameter of the wakeup signal; an identity of a target terminal group to which the first terminal belongs; the quantity of terminal groups; a parameter of terminal information carried by the preamble; and a parameter of terminal information carried by the payload data.

According to a fourth aspect, a wakeup signal monitoring apparatus is provided. The wakeup signal monitoring apparatus includes a sending module. The sending module is configured to send a configuration parameter to a first terminal. The configuration parameter is used by the first terminal to configure a parameter for monitoring a wakeup signal, so that the first terminal monitors a target wakeup signal based on the configuration parameter, where the target wakeup signal is used to wake up or page the first terminal. The configuration parameter includes at least one of the following: a configuration parameter corresponding to a preamble; a configuration parameter of payload data; a time domain resource of the wakeup signal; a frequency domain resource of the wakeup signal; a transmission period parameter of the wakeup signal; an identity of a target terminal group to which the first terminal belongs; the quantity of terminal groups; a parameter of terminal information carried by the preamble; and a parameter of terminal information carried by the payload data.

According to a fifth aspect, a terminal is provided. The terminal includes a processor and a memory. The memory stores a program or instructions executable on the processor. When the program or instructions are executed by the processor, the steps of the method according to the first aspect are implemented.

According to a sixth aspect, a terminal is provided and includes a processor and a communication interface. The communication interface is configured to receive a configuration parameter from a network device, where the configuration parameter is used to configure a parameter for monitoring a wakeup signal. The processor is configured to monitor a target wakeup signal based on the configuration parameter, where the target wakeup signal is used to wake up or page the terminal. The configuration parameter includes at least one of the following: a configuration parameter corresponding to a preamble; a configuration parameter of payload data; a time domain resource of the wakeup signal; a frequency domain resource of the wakeup signal; a transmission period parameter of the wakeup signal; an identity of a target terminal group to which the first terminal belongs; the quantity of terminal groups; a parameter of terminal information carried by the preamble; and a parameter of terminal information carried by the payload data.

According to a seventh aspect, a network device is provided. The network device includes a processor and a memory. The memory stores a program or instructions executable on the processor. When the program or instructions are executed by the processor, the steps of the method according to the third aspect are implemented.

According to an eighth aspect, a network device is provided and includes a processor and a communication interface. The communication interface is configured to send a configuration parameter to a first terminal. The configuration parameter is used by the first terminal to configure a parameter for monitoring a wakeup signal, so that the first terminal monitors a target wakeup signal based on the configuration parameter, where the target wakeup signal is used to wake up or page the first terminal. The configuration parameter includes at least one of the following: a configuration parameter corresponding to a preamble; a configuration parameter of payload data; a time domain resource of the wakeup signal; a frequency domain resource of the wakeup signal; a transmission period parameter of the wakeup signal; an identity of a target terminal group to which the first terminal belongs; the quantity of terminal groups; a parameter of terminal information carried by the preamble; and a parameter of terminal information carried by the payload data.

According to a ninth aspect, a wakeup signal monitoring system is provided and includes a terminal and a network device. The terminal may be configured to perform the steps of the method according to the first aspect. The network device may be configured to perform the steps of the method according to the third aspect.

According to a tenth aspect, a readable storage medium is provided. The readable storage medium stores a program or instructions. When the program or instructions are executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor. The processor is configured to run a program or instructions to implement the method according to the first aspect or implement the method according to the third aspect.

According to a twelfth aspect, a computer program or program product is provided. The computer program or program product is stored in a storage medium. The computer program or program product is executed by at least one processor to implement the steps of the method according to the first aspect or implement the steps of the method according to the third aspect.

In the embodiments of this application, the network device may send the configuration parameter to the first terminal, where the configuration parameter is used to configure the parameter for monitoring the wakeup signal, so that the first terminal can monitor the target wakeup signal based on the configuration parameter, where the target wakeup signal is used to wake up or page the first terminal, where the configuration parameter includes at least one of the following: the configuration parameter corresponding to the preamble; the configuration parameter of the payload data; the time domain resource of the wakeup signal; the frequency domain resource of the wakeup signal; the transmission period parameter of the wakeup signal; the identity of the target terminal group to which the first terminal belongs; the quantity of terminal groups; the parameter of the terminal information carried by the preamble; and the parameter of the terminal information carried by the payload data. Because the network device may send the configuration parameter used to configure the parameter for monitoring the wakeup signal to the first terminal, the first terminal can monitor the target wakeup signal based on the configuration parameter. In other words, the first terminal can accurately monitor the target wakeup signal based on at least one of the following: the configuration parameter corresponding to the preamble, the configuration parameter of the payload data, the time domain resource of the wakeup signal, the frequency domain resource of the wakeup signal, the transmission period parameter of the wakeup signal, the identity of the target terminal group, the quantity of terminal groups, the parameter of the terminal information carried by the preamble, and the parameter of the terminal information carried by the payload data. Therefore, a case that the network device does not page the first terminal but the first terminal controls a main communication module to be in a working state to receive a paging message can be avoided, and power consumption of the first terminal can be reduced.

## BRIEF DESCRIPTION OF DRAWINGS

FIG. 1 is a block diagram of a wireless communication system according to an embodiment of this application;
FIG. 2 is a first schematic flowchart of a wakeup signal monitoring method according to an embodiment of this application;
FIG. 3 is a second schematic flowchart of a wakeup signal monitoring method according to an embodiment of this application;
FIG. 4 is a third schematic flowchart of a wakeup signal monitoring method according to an embodiment of this application;
FIG. 5 is a first schematic diagram of a structure of a wakeup signal monitoring apparatus according to an embodiment of this application;
FIG. 6 is a second schematic diagram of a structure of a wakeup signal monitoring apparatus according to an embodiment of this application;
FIG. 7 is a schematic diagram of a structure of a communication device according to an embodiment of this application;
FIG. 8 is a schematic diagram of a hardware structure of a terminal according to an embodiment of this application; and
FIG. 9 is a schematic diagram of a hardware structure of a network device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.
The following describes terms used in the embodiments of this application.

1. Low-power wakeup signal (Low Power-Wake Up Signal, LP-WUS)

In a new radio (New Radio, NR) system, a terminal may include a main communication module and a low-power receiving module, where the main communication module is configured to send and receive mobile communication data, and the low-power receiving module is configured to receive an LP-WUS.
In a case that the terminal is in an energy-saving state, the terminal may control the main communication module to be in a sleep state and control the low-power receiving module to be in a working state. Therefore, in a case that an LP-WUS is received by using the low-power receiving module, the terminal can control the main communication module to be in the working state, and monitor, on a PO in a paging frame (Paging Frame, PF) by using the main communication module, whether a physical downlink control channel (Physical Downlink Control Channel, PDCCH) carries a paging-radio network temporary identity (Paging-Radio Network Temporary Identity, P-RNTI), to determine whether a physical downlink shared channel (Physical Downlink Shared Channel, PDSCH) corresponding to the PDCCH carries a paging message. If the terminal detects that the PDCCH carries the P-RNTI, the terminal may receive the paging message on the corresponding PDSCH based on the P-RNTI, and determine, based on whether a terminal identity of the terminal is included in a terminal identity list in the paging message, whether a network device is paging the terminal.
The LP-WUS may include a preamble (Preamble) and payload (Payload) data. The preamble may be used for any one of the following: detecting and synchronizing the LP-WUS, determining the payload data, carrying other information, and the like. The payload data is used to carry data.

2. Terminal group

In the NR system, the network device may classify terminals with a same PO within coverage of the network device into a plurality of terminal groups, so that when the network device pages a terminal, the network device can send a WUS to a terminal group to which the terminal belongs.

3. Other terms

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

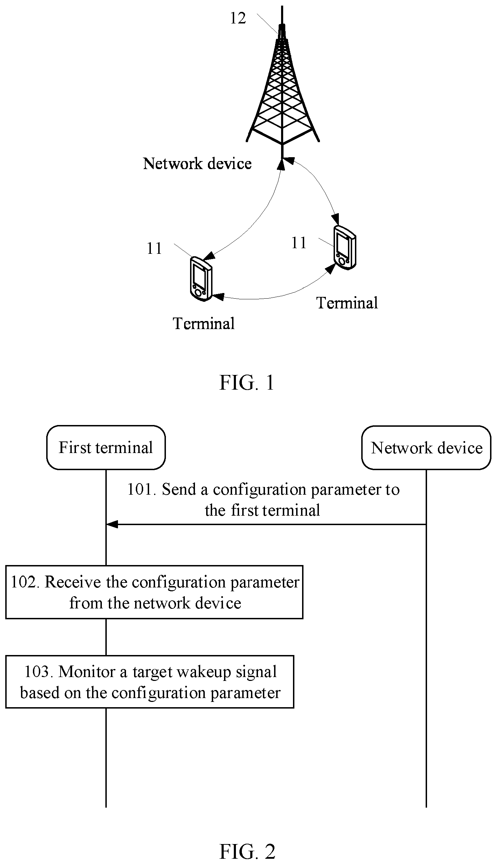

FIG. 1 is a block diagram of a wireless communication system to which an embodiment of this application may be applied. The wireless communication system includes a terminal 11 and a network device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network device 12 may include an access network device or a core network device. The access network device 12 may also be referred to as a radio access network device, a radio access network (Radio Access Network, RAN), a radio access network function, or a radio access network element. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission and Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

A wakeup signal monitoring method and apparatus, an electronic device, a network device, and a medium provided in embodiments of this application are hereinafter described in detail by using some embodiments and application scenarios thereof with reference to the accompanying drawings.

FIG. 2 is a flowchart of a wakeup signal monitoring method according to an embodiment of this application. As shown in FIG. 2, the wakeup signal monitoring method provided in this embodiment of this application may include the following step 101 to step 103.

Step 101: A network device sends a configuration parameter to a first terminal.

Optionally, in this embodiment of this application, before the network device sends a wakeup signal, the network device sends the configuration parameter to the first terminal.

In this embodiment of this application, the configuration parameter is used by the first terminal to configure a parameter for monitoring a wakeup signal, so that the first terminal monitors a target wakeup signal based on the configuration parameter.

The target wakeup signal is used to wake up or page the first terminal. It may be understood that in a case that the first terminal detects the target wakeup signal, the first terminal can control a main communication module of the first terminal to be in a working state.

Optionally, in this embodiment of this application, the target wakeup signal may be specifically an LP-WUS. The target wakeup signal includes a preamble (Preamble) and/or payload data (Payload data).

Optionally, in this embodiment of this application, the configuration parameter includes at least one of the following:

a configuration parameter corresponding to the preamble (Preamble Configuration);
a configuration parameter of the payload data (Payload Configuration);
a time domain resource of the wakeup signal;
a frequency domain resource of the wakeup signal;
a transmission period parameter of the wakeup signal (LP-WUS Period parameter);
an identity of a target terminal group to which the first terminal belongs;
the quantity of terminal groups;
a parameter of terminal information carried by the preamble; and
a parameter of terminal information carried by the payload data.

Optionally, in this embodiment of this application, the configuration parameter corresponding to the preamble (Preamble Configuration) includes at least one of the following:

an index of the preamble (Preamble Index);
an index of the wakeup signal (LP-WUS Index);
the quantity of preambles (Number of Preamble);
the quantity of wakeup signals (Number of LP-WUS);
a length of the preamble;
a first indication;
a second indication; and
N preamble types.

Optionally, in this embodiment of this application, the length of the preamble may be specifically either of the following: a duration of the preamble and a character length of the preamble.

For example, assuming that the length of the preamble is the duration of the preamble, the duration of the preamble may be $z$ microseconds ($\mu$s), where $z$ is a positive number; or assuming that the length of the preamble is the character length of the preamble, the character length of the preamble may be $b$ bits (bit), where $b$ is a positive number.

In this embodiment of this application, the first indication is used to indicate that the length of the preamble is fixed or variable.

In this embodiment of this application, the second indication is used to indicate the terminal to determine the length of the preamble based on a detected preamble.

If the length of the preamble is different, it may be considered that an amount of information carried by the preamble is also different.

In this embodiment of this application, N is a positive integer.

Optionally, in this embodiment of this application, the N preamble types may include at least one of the following: preamble type 1, preamble type 2, and the like. Among the N preamble types, different preamble types have different preamble lengths (such as durations or character lengths).

Optionally, in this embodiment of this application, the configuration parameter of the payload data (Payload Configuration) includes at least one of the following:

a duration of the payload data;
a third indication;
a data rate of the payload data;
a data length carried by the payload data;
a fourth indication; and
M payload data types.

For example, the duration of the payload data may be specifically $c$ $\mu$s, where $c$ is a positive number.

In this embodiment of this application, the third indication is used to indicate that the duration of the payload data is fixed or variable.

For example, the data rate of the payload data may be $d$ kilobits per second (kps), where $d$ is a positive number.

For example, the data length carried by the payload data may be specifically $e$ bits, where $e$ is a positive number.

In this embodiment of this application, the fourth indication is used to indicate that the data length carried by the payload data is fixed or variable.

In this embodiment of this application, M is a positive integer.

Optionally, in this embodiment of this application, the M payload data types may include at least one of the following: type 1, type 2, and the like. Among the M payload data types, different payload data types have different payload data lengths (such as durations or character lengths).

Optionally, in this embodiment of this application, the time domain resource includes X time domain resources, the frequency domain resource includes Y frequency domain resources, and both X and Y are positive integers, where different time domain resources correspond to different preamble types, or different time domain resources correspond to different preamble sequence indexes, or different time domain resources correspond to different terminal groups; and different frequency domain resources correspond to different preamble types, or different frequency domain resources correspond to different preamble sequence indexes, or different frequency domain resources correspond to different terminal groups.

The time domain resource of the wakeup signal may include at least one of the following: time domain resources corresponding to different preamble types, time domain resources corresponding to different preamble sequence indexes, and time domain resources corresponding to different preamble groups.

It should be noted that preamble groups correspond to terminal groups, that is, "time domain resources corresponding to different preamble groups" may be understood as time domain resources corresponding to different terminal groups.

The frequency domain resource of the wakeup signal may include at least one of the following: frequency domain resources corresponding to different preamble types, frequency domain resources corresponding to different preamble sequence indexes, and frequency domain resources corresponding to different preamble groups.

It should be noted that preamble groups correspond to terminal groups, that is, "frequency domain resources corresponding to different preamble groups" may be understood as frequency domain resources corresponding to different terminal groups.

Optionally, in this embodiment of this application, the transmission period parameter includes at least one of the following: a transmission period of the wakeup signal, a duration of the wakeup signal, and a start transmission time of the wakeup signal.

In this embodiment of this application, the identity of the target terminal group is used to indicate the first terminal to detect the target wakeup signal.

It may be understood that the first terminal may be a terminal in the target terminal group.

Optionally, in this embodiment of this application, the identity of the target terminal group includes at least one of the following: an identity calculated based on a terminal identity of the first terminal and an identity configured by the network device.

In this embodiment of this application, the parameter of the terminal information carried by the preamble is used to match a terminal identity or terminal group.

It should be noted that "terminal information carried by the preamble" may be understood as terminal information included in the preamble or terminal information corresponding to the preamble.

The terminal information is used by the first terminal to identify whether the target wakeup signal is detected.

It may be understood that if the terminal identity (or terminal group) matching the parameter of the terminal information carried by the preamble matches the terminal identity of the first terminal (or the terminal group to which the first terminal belongs), it can be considered that the target wakeup signal is detected.

Optionally, in this embodiment of this application, the parameter of the terminal information carried by the preamble includes at least one of the following: the quantity of bits of the terminal information carried by the preamble and a bit range of a terminal identity corresponding to the terminal information carried by the preamble.

For example, the quantity of bits of the terminal information carried by the preamble may be 3 bits.

For example, the bit range of the terminal identity corresponding to the terminal information carried by the preamble may be m bits higher than an $n^{th}$ bit, where n is a positive integer and m is a positive number, for example, $<b_{m+x-1}, b_{m+x-2}, b_{m+x-3}, ..., b_n>$, such as $<b_{12}, b_{11}, b_{10}>$.

In this embodiment of this application, the parameter of the terminal information carried by the payload data is used to match a terminal identity or terminal group.

Optionally, in this embodiment of this application, the parameter of the terminal information carried by the payload data includes at least one of the following:

an amount of the terminal information carried by the payload data;
a data length of each piece of terminal information carried by the payload data;
a bit range of a terminal identity corresponding to the terminal information carried by the payload data;
an amount of terminal group information carried by the payload data; and
a data length of each piece of terminal group information carried by the payload data.

For example, the amount of the terminal information carried by the payload data may be specifically 1 or 32.

For example, the data length of each piece of terminal information carried by the payload data may be specifically q bits, where q is a positive number.

For example, the bit range of the terminal identity corresponding to the terminal information carried by the payload data may be t bits higher than an $r^{th}$ bit, where r is a positive integer and t is a positive number, for example, $<b_{r+t-1}, b_{r+t-2}, b_{r+t-3}, ..., b_r>$, such as $<b_9, b_8, b_7, b_6, b_5, b_4, b_3, b_2, b_1, b_0>$.

For example, the amount of the terminal group information carried by the payload data may be specifically 8.

For example, the data length of each piece of terminal group information carried by the payload data may be specifically w bits, where w is a positive number, and one bit corresponds to one terminal group.

Optionally, in this embodiment of this application, the terminal identity includes at least one of the following: at least some bits of a temporary mobile subscriber identity, a hashed identity (Hashed ID), at least part of an international mobile equipment identity ID, and an equipment identity.

The temporary mobile subscriber identity may be specifically a 5G-S (subscriber) temporary mobile subscriber identity (5G S-temporary mobile subscriber identity, 5G-S-TMSI).

The hashed identity may be specifically a frame check sequence (Frame Check Sequence, FCS) of at least some bits of the 5G-S-TMSI.

Specifically, the equipment identity is a unique identity allocated by the network device.

Optionally, in this embodiment of this application, the foregoing step 101 may be specifically implemented by the following step 101a.

Step 101a: The network device sends a first message to the first terminal.

In this embodiment of this application, the first message includes the configuration parameter; the first message includes at least one of the following: a system information broadcast message, a non-access stratum (Non-access Stratum, NAS) message, and a radio resource control (Radio Resource Control, RRC) message; the NAS message includes either of the following: a service accept message and a tracking area update accept message; and the RRC message includes either of the following: an RRC reconfiguration message and an RRC release message.

Further optionally, in this embodiment of this application, the first message may include a plurality of first sub-messages. Each of the plurality of first sub-messages includes one part of configuration parameters.

Step 102: The first terminal receives the configuration parameter from the network device.

In this embodiment of this application, the configuration parameter is used to configure the parameter for monitoring the wakeup signal.

Optionally, in this embodiment of this application, the foregoing step 102 may be specifically implemented by the following step 102a.

Step 102a: The first terminal receives the first message from the network device.

In this embodiment of this application, the first message includes the configuration parameter; the first message includes at least one of the following: a system information broadcast message, a NAS message, and an RRC message; the NAS message includes either of the following: a service accept message and a tracking area update accept message; and the RRC message includes either of the following: an RRC reconfiguration message and an RRC release message.

Step 103: The first terminal monitors the target wakeup signal based on the configuration parameter.

In this embodiment of this application, the target wakeup signal is used to wake up or page the first terminal.

In this embodiment of this application, in a case that the first terminal detects the target wakeup signal, the first terminal can control the main communication module to be in the working state to receive a paging message sent by the network device.

Optionally, in a possible implementation of this embodiment of this application, the foregoing step 103 may be specifically implemented by the following step 103a and step 103b.

Step 103a: The first terminal determines first information based on the configuration parameter.

In this embodiment of this application, the first information includes any one of the following:

a target wakeup signal index;
a target preamble index;
a target preamble type; and
a target resource location, where
the target resource location includes at least one of a target time domain resource location and a target frequency domain resource location.

Further optionally, in this embodiment of this application, in a case that the configuration parameter includes at least one of the configuration parameter corresponding to the preamble, the time domain resource of the wakeup signal, the frequency domain resource of the wakeup signal, the transmission period parameter of the wakeup signal, the identity of the target terminal group, and the quantity of terminal groups, the first terminal may determine the first information based on the configuration parameter.

Specifically, in a case that the configuration parameter includes the configuration parameter corresponding to the preamble, the first information includes at least one of the target wakeup signal index, the target preamble index, and the target preamble type.

In a case that the configuration parameter corresponding to the preamble includes the index of the preamble, the first terminal may directly determine the index of the preamble as the target preamble index.

In a case that the configuration parameter corresponding to the preamble includes the index of the wakeup signal, the first terminal may directly determine the index of the wakeup signal as the target wakeup signal index.

In a case that the configuration parameter corresponding to the preamble includes the quantity of preambles, the first terminal may determine a preamble type corresponding to the quantity of preambles as the target preamble type.

In a case that the configuration parameter corresponding to the preamble includes the quantity of wakeup signals, the first terminal may determine the target wakeup signal index based on the quantity of wakeup signals by using a first algorithm. It should be noted that the first algorithm is described in detail in the following embodiment. Details are not described herein in this embodiment of this application.

In a case that the configuration parameter corresponding to the preamble includes the length of the preamble, the first terminal may determine a preamble type corresponding to the length of the preamble as the target preamble type.

In a case that the configuration parameter corresponding to the preamble includes the first indication, the first terminal may determine a corresponding preamble type based on whether the length of the preamble is fixed or variable, and determine the corresponding preamble type as the target preamble type.

In a case that the configuration parameter corresponding to the preamble includes the second indication, the first terminal may first determine a length of the detected preamble, and determine a target preamble type corresponding to the length of the preamble.

In a case that the configuration parameter corresponding to the preamble includes the N preamble types, the first terminal may determine the N preamble types as target preamble types.

Specifically, in a case that the configuration parameter includes the time domain resource of the wakeup signal, the frequency domain resource of the wakeup signal, and the transmission period parameter of the wakeup signal, the first information includes the target preamble type.

In a case that the configuration parameter is the time domain resource of the wakeup signal, the first terminal may determine a preamble type corresponding to the time domain resource of the wakeup signal as the target preamble type.

In a case that the configuration parameter is the frequency domain resource of the wakeup signal, the first terminal may determine a preamble type corresponding to the frequency domain resource of the wakeup signal as the target preamble type.

In a case that the configuration parameter is the transmission period parameter of the wakeup signal, the first terminal may determine the time domain resources of the wakeup signal based on the transmission period parameter of the wakeup signal, and determine a preamble type corresponding to the determined time domain resource of the wakeup signal as the target preamble type.

Specifically, in a case that the configuration parameter includes at least one of the identity of the target terminal group and the quantity of terminal groups, the first information may include the target wakeup signal index.

In a case that the configuration parameter is the identity of the target terminal group, the first terminal may determine the target wakeup signal index based on the identity of the target terminal group by using a second algorithm. It should be noted that the second algorithm is described in detail in the following embodiment. Details are not described herein in this embodiment of this application.

In a case that the configuration parameter is the quantity of terminal groups, the first terminal may first determine the identity of the target terminal group based on the quantity of terminal groups, and then determine the target wakeup signal index based on the identity of the target terminal group by using the second algorithm.

Optionally, in this embodiment of this application, the configuration parameter includes the configuration parameter corresponding to the preamble, and the configuration parameter corresponding to the preamble includes the quantity of wakeup signals; and the first information includes the target wakeup signal index. Specifically, the foregoing step 103a may be specifically implemented by the following step 103a1.

Step 103a1: The first terminal determines the target wakeup signal index based on the quantity of wakeup signals and a terminal identity of the first terminal.

Further optionally, in this embodiment of this application, the terminal identity of the first terminal may be specifically at least some bits of a temporary mobile subscriber identity of the first terminal.

Further optionally, in this embodiment of this application, the first terminal may determine the target wakeup signal index based on the quantity of wakeup signals and the terminal identity of the first terminal by using the first algorithm.

The first algorithm may be specifically:

$$LP - WUS\_index = UE\_ID \bmod Q,$$

where Q is an integer greater than 0, Q is the quantity of wakeup signals, and UE_ID is at least some bits of the temporary mobile subscriber identity of the first terminal.

Optionally, in this embodiment of this application, the configuration parameter includes the configuration parameter corresponding to the preamble and the identity of the target terminal group, and the configuration parameter corresponding to the preamble includes the quantity of wakeup signals; and the first information includes the target wakeup signal index. Specifically, the foregoing step 103a may be specifically implemented by the following step 103a2.

Step 103a2: The first terminal determines the target wakeup signal index based on the identity of the target terminal group and the quantity of wakeup signals.

The second algorithm may be specifically:

$$LP - WUS\_index = \text{identity of the target terminal group} \bmod R,$$

where R is an integer greater than 0 and R is the quantity of wakeup signals.

Step 103b: The first terminal determines that a first wakeup signal is the target wakeup signal.

In this embodiment of this application, information of the first wakeup signal matches the first information.

The information of the first wakeup signal may include any one of the following: an index of the first wakeup signal, an index of a preamble of the first wakeup signal, a type of the preamble of the first wakeup signal, and a resource location of the first wakeup signal. The resource location of the first wakeup signal may include at least one of the following: a time domain resource location of the first wakeup signal and a frequency domain resource location of the first wakeup signal.

It may be understood that when the first terminal detects the first wakeup signal, the first terminal may determine that the target wakeup signal is detected.

Therefore, it can be learned that because the first terminal can first determine the first information based on the configuration parameter, and then determine the first wakeup signal whose information matches the first information as the target wakeup signal, accuracy of determining the target wakeup signal can be improved. Further, a case that the network device does not page the first terminal but the first terminal controls the main communication module to be in the working state to receive a paging message is avoided.

Optionally, in another possible implementation of this embodiment of this application, the foregoing step 103 may be specifically implemented by the following step 103c and step 103d.

Step 103c: The first terminal decodes a second wakeup signal based on the configuration parameter to obtain a target identity.

Further optionally, in a case that the configuration parameter includes at least one of the configuration parameter of the payload data, the parameter of the terminal information carried by the preamble, and the parameter of the terminal information carried by the payload data, the first terminal decodes the second wakeup signal based on the configuration parameter to obtain the target identity.

In a case that the configuration parameter includes the parameter of the terminal information carried by the preamble, the first terminal may decode a preamble of the second wakeup signal based on the parameter of the terminal information carried by the preamble to obtain the target identity.

In a case that the configuration parameter includes at least one of the configuration parameter of the payload data and the parameter of the terminal information carried by the payload data, the first terminal may decode payload data of the second wakeup signal based on at least one of the configuration parameter of the payload data and the parameter of the terminal information carried by the payload data to obtain the target identity.

In this embodiment of this application, the first terminal determines the second wakeup signal as the target wakeup signal in a case that the target identity matches the terminal identity of the first terminal.

It may be understood that when the first terminal detects the second wakeup signal, the first terminal may determine that the target wakeup signal is detected.

Therefore, it can be learned that because the first terminal can decode the second wakeup signal based on the configuration parameter to obtain the target identity, and determine the second wakeup signal as the target wakeup signal in the case that the target identity matches the terminal identity of the first terminal, accuracy of determining the target wakeup signal can be improved. Further, a case that the network device does not page the first terminal but the first terminal controls the main communication module to be in the working state to receive a paging message is avoided.

The following uses different examples to illustrate how the network device sends the configuration parameter to the first terminal, so that the first terminal can monitor the target wakeup signal.

Example 1

In this example, the first message is a system information broadcast message.

The network device may send the system information broadcast message, so that the first terminal can receive the system information broadcast message. The system information broadcast message includes the configuration parameter. The configuration parameter includes at least one of the following: the configuration parameter corresponding to the preamble, the configuration parameter of the payload data, the time domain resource of the wakeup signal, and the frequency domain resource of the wakeup signal. The configuration parameter corresponding to the preamble includes at least one of the following: the quantity of preambles and the quantity of wakeup signals. Therefore, the first terminal can determine the target wakeup signal index (or target preamble index) based on the configuration parameter by using the first algorithm, to monitor the target wakeup signal based on the target wakeup signal index (or target preamble index), where the first algorithm may be specifically:

$$LP - WUS\_index = UE\_ID \bmod Q,$$

where Q is an integer greater than 0, Q is the quantity of wakeup signals, UE_ID is at least some bits of the temporary mobile subscriber identity of the first terminal, and LP - WUS_index is the target wakeup signal index (which may also be understood as the target preamble index).

Example 2

In this example, the first message includes a system information broadcast message and a NAS message (or RRC message).

The network device may send the system information broadcast message and the NAS message (or RRC message), where the system information broadcast message includes one part of configuration parameters, and the NAS message (or RRC message) includes another part of configuration parameters, so that the first terminal can receive the system information broadcast message and the NAS message (or RRC message) to obtain the configuration parameters. Therefore, the first terminal can determine the target wakeup signal index (or target preamble index) based on the configuration parameters, to monitor the target wakeup signal based on the target wakeup signal index (or target preamble index).

The time of sending the system information broadcast message and the time of sending the NAS message (or RRC message) by the network device are not limited in this example. For example, the network device may send the system information broadcast message before sending the NAS message (or RRC message).

Example 3

In this example, the first message includes a system information broadcast message and a NAS message (or RRC message).

The network device may send the system information broadcast message and the NAS message (or RRC message). The system information broadcast message includes one part of configuration parameters. The NAS message (or RRC message) includes another part of configuration parameters. The one part of configuration parameters include at least one of the following: the quantity of terminal groups, the quantity of preambles, the quantity of wakeup signals, time domain resources of the wakeup signals, and frequency domain resources of the wakeup signals. The other part of configuration parameters include at least one of the following: the identity of the target terminal group to which the first terminal belongs. Therefore, the first terminal can receive the system information broadcast message and the NAS message (or RRC message) to obtain the configuration parameters. Therefore, the first terminal can determine the target wakeup signal index (or target preamble index) based on the configuration parameters, to monitor the target wakeup signal based on the target wakeup signal index (or target preamble index).

The first terminal may determine the target wakeup signal index (or target preamble index) based on the configuration parameters by using the second algorithm, where the second algorithm may be specifically:

$$LP - WUS\_index = \text{identity of the target terminal group} \bmod R,$$

where R is an integer greater than 0, R is the quantity of wakeup signals, and LP - WUS_index is the target wakeup signal index (which may also be understood as the target preamble index).

It may be understood that each terminal group of the network device corresponds to one wakeup signal. Therefore, the identity of the target terminal group may be understood as the target wakeup signal index (or target preamble index). Therefore, the second algorithm can be used to determine the target wakeup signal index (or target preamble index).

The time of sending the system information broadcast message and the time of sending the NAS message (or RRC message) by the network device are not limited in this example.

Example 4

In this example, the first message includes a system information broadcast message and a NAS message (or RRC message).

The network device may send the system information broadcast message and the NAS message (or RRC message). The system information broadcast message includes one part of configuration parameters. The NAS message (or RRC message) includes another part of configuration parameters. The one part of configuration parameters include at least one of the following: the quantity of terminal groups, the quantity of preambles, the quantity of wakeup signals, time domain resources of the wakeup signals, and frequency domain resources of the wakeup signals. The other part of configuration parameters include at least one of the following: the identity of the target terminal group to which the first terminal belongs, and indexes of the wakeup signals. Therefore, the first terminal can receive the system information broadcast message and the NAS message (or RRC message) to obtain the configuration parameters. Therefore, the first terminal can determine the target wakeup signal index (or target preamble index) based on the configuration parameters, to monitor the target wakeup signal based on the target wakeup signal index (or target preamble index).

The time of sending the system information broadcast message and the time of sending the NAS message (or RRC message) by the network device are not limited in this example.

Example 5

In this example, the first message is a system information broadcast message.

The network device may send the system information broadcast message, so that the first terminal can receive the system information broadcast message. The system information broadcast message includes the configuration parameter. The configuration parameter includes at least one of the following: the configuration parameter corresponding to the preamble, the configuration parameter of the payload data, the time domain resource of the wakeup signal, and the frequency domain resource of the wakeup signal. The configuration parameter corresponding to the preamble includes at least one of the following: the first indication, the second indication, and the N preamble types. The configuration parameter of the payload data includes the third indication, the fourth indication, and the M payload data types. Therefore, the first terminal can monitor the target wakeup signal based on the configuration parameter.

For example, it is assumed that the configuration parameter corresponding to the preamble includes the N preamble types, such as preamble type 1 and preamble type 2. Preamble type 1 includes $2^x$ preambles, including an x-bit terminal identity, and preamble type 2 includes $2^y$ preambles, including a y-bit terminal identity. Therefore, the first terminal can determine whether the terminal identity of the first terminal matches the x-bit terminal identity, to determine whether the target wakeup signal is detected, or can determine whether the terminal identity of the first terminal matches the y-bit terminal identity, to determine whether the target wakeup signal is detected.

Example 6

In this example, the first message includes a system information broadcast message and a NAS message (or RRC message).

The network device may send the system information broadcast message and the NAS message (or RRC message). The system information broadcast message includes one part of configuration parameters. The NAS message (or RRC message) includes another part of configuration parameters. The one part of configuration parameters include at least one of the following: the time domain resource of the wakeup signal and the frequency domain resource of the wakeup signal. The other part of configuration parameters include at least one of the following: the configuration parameter corresponding to the preamble and the configuration parameter of the payload data. The configuration parameter corresponding to the preamble may include at least one of the following: the index of the wakeup signal, the second indication, and the N preamble types. The configuration parameter of the payload data may include at least one of the following: the third indication and the M payload data types. Therefore, the first terminal can receive the system information broadcast message and the NAS messages (or RRC message) to obtain the configuration parameters. Therefore, the first terminal can monitor the target wakeup signal based on the configuration parameters.

The time of sending the system information broadcast message and the time of sending the NAS message (or RRC message) by the network device are not limited in this example.

Example 7

In this example, the first message includes a system information broadcast message and a NAS message (or RRC message).

The network device may send the system information broadcast message and the NAS message (or RRC message). The system information broadcast message includes one part of configuration parameters. The NAS message (or RRC message) includes another part of configuration parameters. The one part of configuration parameters include at least one of the following: the quantity of terminal groups, the configuration parameter corresponding to the preamble, the time domain resource of the wakeup signal, and the frequency domain resource of the wakeup signal. The configuration parameter corresponding to the preamble includes at least one of the following: the quantity of preambles and the quantity of wakeup signals. The other part of configuration parameters include at least one of the following: the identity of the target terminal group to which the first terminal belongs, the configuration parameter corresponding to the preamble, and the configuration parameter of the payload data. The configuration parameter corresponding to the preamble includes at least one of the following: the index of the wakeup signal, the second indication, and the N preamble types. The configuration parameter of the payload data includes at least one of the following: the third indication, the fourth indication, and the M payload data types. Therefore, the first terminal can receive the system information broadcast message and the NAS messages (or RRC message) to obtain the configuration parameters. Therefore, the first terminal can monitor the target wakeup signal based on the configuration parameters.

The time of sending the system information broadcast message and the time of sending the NAS message (or RRC message) by the network device are not limited in this example.

In the wakeup signal monitoring method provided in this embodiment of this application, the network device may send the configuration parameter to the first terminal, where the configuration parameter is used to configure the parameter for monitoring the wakeup signal, so that the first terminal can monitor the target wakeup signal based on the configuration parameter, where the target wakeup signal is used to wake up or page the first terminal, where the configuration parameter includes at least one of the following: the configuration parameter corresponding to the preamble; the configuration parameter of the payload data; the time domain resource of the wakeup signal; the frequency domain resource of the wakeup signal; the transmission period parameter of the wakeup signal; the identity of the target terminal group to which the first terminal belongs; the quantity of terminal groups; the parameter of the terminal information carried by the preamble; and the parameter of the terminal information carried by the payload data. Because the network device may send the configuration parameter used to configure the parameter for monitoring the wakeup signal to the first terminal, the first terminal can monitor the target wakeup signal based on the configuration parameter. In other words, the first terminal can accurately monitor the target wakeup signal based on at least one of the following: the configuration parameter corresponding to the preamble, the configuration parameter of the payload data, the time domain resource of the wakeup signal, the frequency domain resource of the wakeup signal, the transmission period parameter of the wakeup signal, the identity of the target terminal group, the quantity of terminal groups, the parameter of the terminal information carried by the preamble, and the parameter of the terminal information carried by the payload data. Therefore, a case that the network device does not page the first terminal but the first terminal controls a main communication module to be in a working state to receive a paging message can be avoided, and power consumption of the first terminal can be reduced.

Certainly, the first terminal may also report preference information to the network device, so that the network device can send the configuration parameter to the first terminal based on the reported preference information, or send an updated configuration parameter to the first terminal again. Assuming that the network device sends the configuration parameter to the first terminal based on the reported preference information, the following uses a specific example for description.

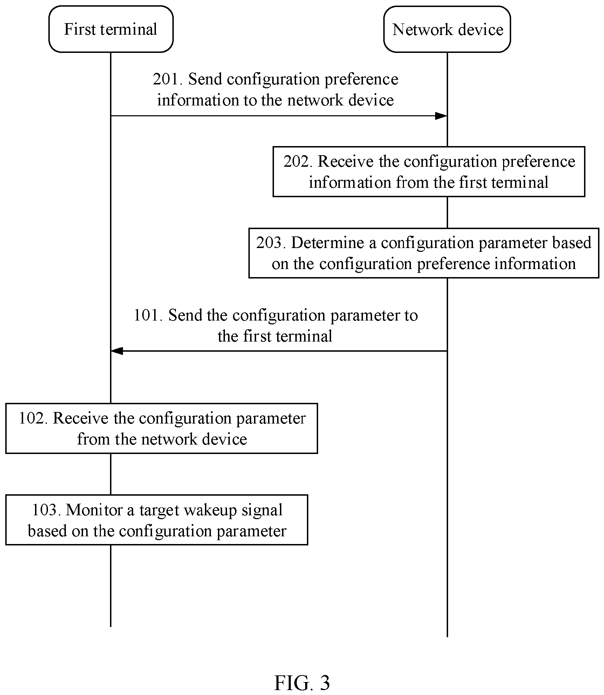

Optionally, in this embodiment of this application, with reference to FIG. 2, as shown in FIG. 3, before the foregoing step 101, the wakeup signal monitoring method provided in this embodiment of this application may further include the following step 201 to step 203.

Step 201: The first terminal sends configuration preference information to the network device.

In this embodiment of this application, the configuration preference information is used to indicate a preference of the first terminal for the target wakeup signal.

In a case that the first terminal enters an RRC_connected state, the first terminal may send the configuration preference information to the network device.

In this embodiment of this application, the configuration preference information includes at least one of the following:

device information of the first terminal;
preamble preference information; and
payload data preference information.

Optionally, in this embodiment of this application, the device information of the first terminal may be mobility status information of the first terminal, a power consumption sensitivity type, battery information, and the like.

For example, the device information of the first terminal may be information about the first terminal being in a stationary state, information about the first terminal moving at a low speed (that is, moving at a speed lower than or equal to a preset speed), information of a high power consumption sensitivity type, information about a battery limitation, and the like.

Optionally, in this embodiment of this application, the preamble preference information includes at least one of the following:

a fifth indication;
T preamble types; and
a preferred preamble length.

The fifth indication is used to indicate that the first terminal prefers the preamble of the target wakeup signal to be a dynamic preamble; a preamble type or length of the dynamic preamble is variable; and T is a positive integer.

The T preamble types may include at least one of the following: preferred preamble type 1, preferred preamble type 2, and the like.

It should be noted that "preferred preamble length" may be understood as a length of a preamble used when the first terminal prefers the target wakeup signal sent by the network device.

The preferred preamble length may be any one of the following: a long sequence, a short sequence, x bits, and the like, where x is a positive number.

Optionally, in this embodiment of this application, the payload data preference information includes at least one of the following:

a sixth indication;
a seventh indication;
a preferred payload data type;
a preferred data length of the payload data; and
a preferred data rate of the payload data, where
the sixth indication is used to indicate that the first terminal prefers the target wakeup signal sent by the network device to carry the payload data or not;
the seventh indication is used to indicate that the first terminal prefers the payload data of the target wakeup signal to be dynamic payload data; and a payload data type, a data length, or a duration of the dynamic payload data is variable.

The preferred payload data type may be any one of the following: preferred type 1, preferred type 2, and the like.

The preferred data rate of the payload data may be specifically any one of the following: a high rate (that is, higher than a preset rate), a low rate (that is, lower than or equal to the preset rate), and y kps, where y is a positive number.

Optionally, in this embodiment of this application, the foregoing step 201 may be specifically implemented by the following step 201a.

Step 201a: The first terminal sends a second message to the network device.

In this embodiment of this application, the second message includes the configuration preference information. The second message includes at least one of the following: a NAS message and an RRC message. The NAS message includes any one of the following: a registration request message (Registration Request), a service request message (Service Request), and a tracking area update request message (Tracking Area update Request). The RRC message includes terminal assistance information (UE Assistance Information).

Further optionally, in this embodiment of this application, the second message may include a plurality of second sub-messages. Each of the plurality of second sub-messages includes a part of configuration preference information.

Step 202: The network device receives the configuration preference information from the first terminal.

Optionally, in this embodiment of this application, the foregoing step 202 may be specifically implemented by the following step 202a.

Step 202a: The network device receives the second message from the first terminal.

In this embodiment of this application, the second message includes the configuration preference information. The second message includes at least one of the following: a NAS message and an RRC message. The NAS message includes any one of the following: a registration request message (Registration Request), a service request message (Service Request), and a tracking area update request message (Tracking Area update Request). The RRC message includes terminal assistance information (UE Assistance Information).

Step 203: The network device determines the configuration parameter based on the configuration preference information.

It may be understood that the network device may provide the configuration parameter for the first terminal based on the configuration preference information reported by the first terminal.

As can be learned, the first terminal may send the configuration preference information used to indicate the preference of the first terminal for the target wakeup signal to the network device, so that the network device can determine the configuration parameter based on the configuration preference information. Therefore, the configuration parameter can better match the preference of the first terminal for the target wakeup signal, to achieve better communication performance.

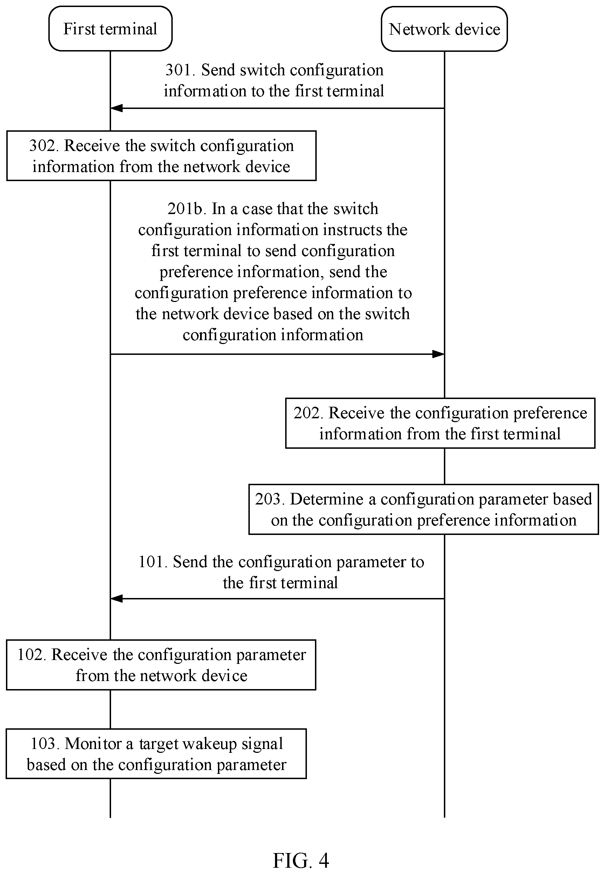

Optionally, in this embodiment of this application, with reference to FIG. 3, as shown in FIG. 4, before the foregoing step 201, the wakeup signal monitoring method provided in this embodiment of this application may further include the following step 301 and step 302, and the foregoing step 201 may be specifically implemented by the following step 201b.

Step 301: The network device sends switch configuration information to the first terminal.

In this embodiment of this application, the switch configuration information is used to indicate whether the first terminal is capable of sending the configuration preference information; and the configuration preference information is sent in a case that the switch configuration information indicates that the first terminal is capable of sending the configuration preference information.

The switch configuration information includes a tenth indication, and the tenth indication is used to indicate whether the first terminal is capable of sending the configuration preference information.

For example, the tenth indication may be specifically a configuration of setting up (Setup) the configuration preference information, that is, the tenth indication is used to indicate that the first terminal is capable of sending the configuration preference information, or may be a configuration of releasing (Release) the configuration preference information, that is, the tenth indication is used to indicate that the first terminal is incapable of sending the configuration preference information.

In this embodiment of this application, in the case that the switch configuration information indicates the first terminal to send the configuration preference information, the switch configuration information includes at least one of the following:

> target indication information;
> a preferred preamble range; and
> a preferred payload data range, where
> the target indication information is used to indicate whether the first terminal is capable of sending the device information of the first terminal to the network device.

Optionally, in this embodiment of this application, the preferred preamble range includes at least one of the following:

> a preferred preamble type;
> a preferred preamble length; and
> an eighth indication, where
> the eighth indication is used to indicate whether the preamble of the target wakeup signal is allowed to be a dynamic preamble; and a preamble type or length of the dynamic preamble is variable.

Optionally, in this embodiment of this application, the preferred payload data range includes at least one of the following:

> a preferred payload data type;
> a preferred data length of the payload data; and
> a ninth indication, where
> the ninth indication is used to indicate whether the payload data of the target wakeup signal is allowed to be dynamic payload data; and a payload data type, a data length, or a duration of the dynamic payload data is variable.

Optionally, in this embodiment of this application, the foregoing step 301 may be specifically implemented by the following step 301a.

Step 301a: The network device sends a third message to the first terminal.

In this embodiment of this application, the third message includes the switch configuration information, and the third message includes at least one of the following: a NAS message and an RRC message; the NAS message includes any one of the following: a registration accept message, a service accept message, and a tracking area update accept message; and the RRC message includes an RRC reconfiguration message.

Further optionally, in this embodiment of this application, the third message may include a plurality of third sub-messages. Each of the plurality of third sub-messages includes a part of switch configuration information.

Step 302: The first terminal receives the switch configuration information from the network device.

Optionally, in this embodiment of this application, the foregoing step 302 may be specifically implemented by the following step 302a.

Step 302a: The first terminal receives the third message from the network device.

In this embodiment of this application, the third message includes the switch configuration information, and the third message includes at least one of the following: a NAS message and an RRC message; the NAS message includes any one of the following: a registration accept message, a service accept message, and a tracking area update accept message; and the RRC message includes an RRC reconfiguration message.

Step 201b: In a case that the switch configuration information indicates the first terminal to send the configuration preference information, the first terminal sends the configuration preference information to the network device based on the switch configuration information.

Therefore, it can be learned that, because the first terminal can send the configuration preference information to the network device only in the case that the switch configuration information indicates the first terminal to send the configuration preference information, instead of directly sending the configuration preference information to the network device, air interface resources can be saved.

Optionally, in this embodiment of this application, before the foregoing step 301, the wakeup signal monitoring method provided in this embodiment of this application may further include the following step 401 to step 403.

Step 401: The first terminal sends second information to the network device.

In this embodiment of this application, the second information is used to indicate a type of wakeup signal supported by the first terminal.

The second information may be specifically capability information. The second information may include at least one of an RRC capability and a NAS capability.

Step 402: The network device receives the second information from the first terminal.

In this embodiment of this application, the second information is used to indicate the type of wakeup signal supported by the first terminal.

Step 403: The network device determines third information based on the second information.

The third information includes at least one of the following: the configuration parameter and the switch configuration information.

Further optionally, in this embodiment of this application, the network device may determine, based on the second information, a parameter that conforms to the type of wakeup signal supported by the first terminal as indicated by the second information, to determine the configuration parameter.

As can be learned, the first terminal may send the second information used to indicate the type of wakeup signal supported by the first terminal to the network device, so that the network device can determine at least one of the configuration parameter and the switch configuration information based on the second information. Therefore, a case that the switch configuration of the configuration preference information does not match due to mismatch of the type of wakeup signal supported by the first terminal can be avoided.

The wakeup signal monitoring method provided in the embodiments of this application may be performed by a wakeup signal monitoring apparatus. A wakeup signal monitoring apparatus provided in the embodiments of this application is described by assuming that the wakeup signal monitoring method is performed by the wakeup signal monitoring apparatus in the embodiments of this application.

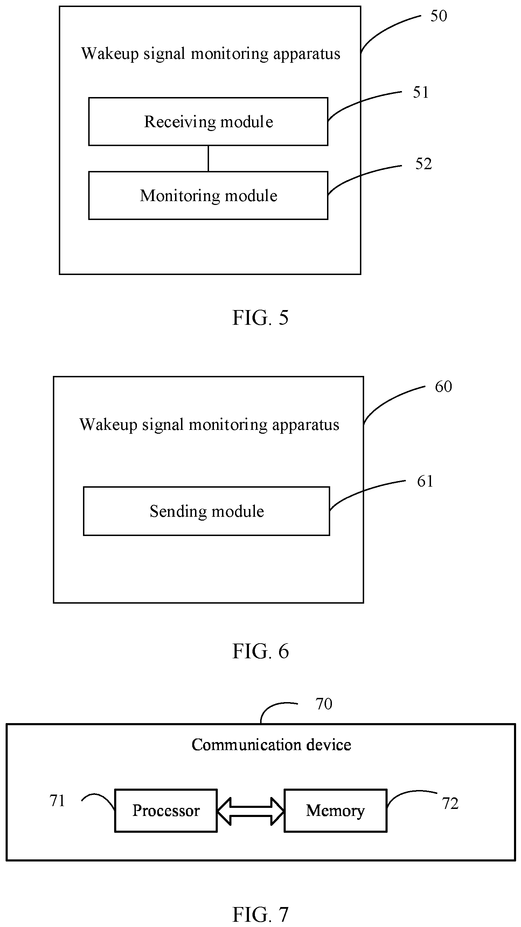

FIG. 5 is a schematic diagram of a possible structure of a wakeup signal monitoring apparatus according to an embodiment of this application. As shown in FIG. 5, the wakeup signal monitoring apparatus 50 includes a receiving module 51 and a monitoring module 52.

The receiving module 51 is configured to receive a configuration parameter from a network device, where the configuration parameter is used to configure a parameter for monitoring a wakeup signal. The monitoring module 52 is configured to monitor a target wakeup signal based on the configuration parameter received by the receiving module 51, where the target wakeup signal is used to wake up or page the wakeup signal monitoring apparatus, where the configuration parameter includes at least one of the following: a configuration parameter corresponding to a preamble; a configuration parameter of payload data; a time domain resource of the wakeup signal; a frequency domain resource of the wakeup signal; a transmission period parameter of the wakeup signal; an identity of a target terminal group to which the wakeup signal monitoring apparatus 50 belongs; the quantity of terminal groups; a parameter of terminal information carried by the preamble; and a parameter of terminal information carried by the payload data.

In a possible implementation, the configuration parameter corresponding to the preamble includes at least one of the following: an index of the preamble; an index of the wakeup signal; the quantity of preambles; the quantity of wakeup signals; a length of the preamble; a first indication; a second indication; and N preamble types, where the first indication is used to indicate that the length of the preamble is fixed or variable; the second indication is used to indicate the wakeup signal monitoring apparatus 50 to determine the length of the preamble based on the detected preamble; and N is a positive integer.

In a possible implementation, the configuration parameter of the payload data includes at least one of the following: a duration of the payload data; a third indication; a data rate of the payload data; a data length carried by the payload data; a fourth indication; and M payload data types, where the third indication is used to indicate that the duration of the payload data is fixed or variable; the fourth indication is used to indicate that the data length carried by the payload data is fixed or variable; and M is a positive integer.

In a possible implementation, the time domain resource includes X time domain resources, the frequency domain resource includes Y frequency domain resources, and both X and Y are positive integers, where different time domain resources correspond to different preamble types, or different time domain resources correspond to different preamble sequence indexes, or different time domain resources correspond to different terminal groups; and different frequency domain resources correspond to different preamble types, or different frequency domain resources correspond to different preamble sequence indexes, or different frequency domain resources correspond to different terminal groups.

**In** a possible implementation, the transmission period parameter includes at least one of the following: a period of the wakeup signal, a duration of the wakeup signal, and a start transmission time of the wakeup signal.

In a possible implementation, the identity of the target terminal group includes at least one of the following: an identity calculated based on a terminal identity of the wakeup signal monitoring apparatus 50 and an identity configured by the network device.

In a possible implementation, the parameter of the terminal information carried by the preamble includes at least one of the following: the quantity of bits of the terminal information carried by the preamble and a bit range of a terminal identity corresponding to the terminal information carried by the preamble.

In a possible implementation, the parameter of the terminal information carried by the payload data includes at least one of the following: an amount of the terminal information carried by the payload data; a data length of each piece of terminal information carried by the payload data; a bit range of a terminal identity corresponding to the terminal information carried by the payload data; an amount of terminal group information carried by the payload data; and a data length of each piece of terminal group information carried by the payload data.

In a possible implementation, the terminal identity includes at least one of the following: at least some bits of a temporary mobile subscriber identity, a hashed identity, at least a part of an international mobile equipment identity, and an equipment identity.

In a possible implementation, the equipment identity is a unique identity allocated by the network device.

In a possible implementation, the monitoring module 52 is specifically configured to determine first information based on the configuration parameter, and determine that a first wakeup signal is the target wakeup signal, where information of the first wakeup signal matches the first information, where the first information includes any one of the following: a target wakeup signal index; a target preamble index; a target preamble type; and a target resource location, where the target resource location includes at least one of a target time domain resource location and a target frequency domain resource location.

In a possible implementation, the configuration parameter includes the configuration parameter corresponding to the preamble, and the configuration parameter corresponding to the preamble includes the quantity of wakeup signals; and the first information includes the target wakeup signal index; and the monitoring module 52 is specifically configured to determine the target wakeup signal index based on the quantity of wakeup signals and a terminal identity of the wakeup signal monitoring apparatus 50.

In a possible implementation, the configuration parameter includes the configuration parameter corresponding to the preamble and the identity of the target terminal group, and the configuration parameter corresponding to the preamble includes the quantity of wakeup signals; and the first information includes the target wakeup signal index; and the monitoring module 52 is specifically configured to determine the target wakeup signal index based on the identity of the target terminal group and the quantity of wakeup signals.

In a possible implementation, the monitoring module 52 is specifically configured to decode a second wakeup signal based on the configuration parameter to obtain a target identity, where in a case that the target identity matches a terminal identity of the wakeup signal monitoring apparatus 50, the wakeup signal monitoring apparatus 50 determines that the second wakeup signal is the target wakeup signal.

In a possible implementation, the receiving module 51 is specifically configured to receive a first message from the network device, where the first message includes the configuration parameter, where the first message includes at least one of the following: a system information broadcast message, a NAS message, and an RRC message; and the NAS message includes either of the following: a service accept message and a tracking area update accept message; and the RRC message includes either of the following: an RRC reconfiguration message and an RRC release message.

In a possible implementation, the wakeup signal monitoring apparatus 50 provided in this embodiment of this application may further include a sending module, where the sending module is configured to send second information to the network device, where the second information is used to indicate a type of wakeup signal supported by the wakeup signal monitoring apparatus 50.

In a possible implementation, the wakeup signal monitoring apparatus 50 provided in this embodiment of this application may further include a sending module, where the sending module is configured to send configuration preference information to the network device, where the configuration preference information is used to indicate a preference of the wakeup signal monitoring apparatus 50 for the target wakeup signal, where the configuration preference information includes at least one of the following: device information of the wakeup signal monitoring apparatus; preamble preference information; and payload data preference information.

In a possible implementation, the sending module is specifically configured to send a second message, where the second message includes the configuration preference information, where the second message includes at least one of the following: a NAS message and an RRC message; the NAS message includes any one of the following: a registration request message, a service request message, and a tracking area update request message; and the RRC message includes terminal assistance information.

In a possible implementation, the preamble preference information includes at least one of the following: a fifth indication; T preferred preamble types; and a preferred preamble length, where the fifth indication is used to indicate that the wakeup signal monitoring apparatus 50 prefers the preamble of the target wakeup signal to be a dynamic preamble; a preamble type or length of the dynamic preamble is variable; and T is a positive integer.

In a possible implementation, the payload data preference information includes at least one of the following: a sixth indication; a seventh indication; a preferred payload data type; a preferred data length of the payload data; and a preferred data rate of the payload data, where the sixth indication is used to indicate that the wakeup signal monitoring apparatus 50 prefers the target wakeup signal sent by the network device to carry the payload data or not; the seventh indication is used to indicate that the wakeup signal monitoring apparatus 50 prefers the payload data of the target wakeup signal to be dynamic payload data; and a payload data type, a data length, or a duration of the dynamic payload data is variable.

In a possible implementation, the receiving module 51 is further configured to receive switch configuration information from the network device, where the switch configuration information is used to indicate whether the wakeup signal monitoring apparatus 50 is capable of sending the configuration preference information; and the sending module is specifically configured to send the configuration preference information to the network device based on the switch configuration information in a case that the switch configuration information indicates that the wakeup signal monitoring apparatus 50 is capable of sending the configuration preference information, where in the case that the switch configuration information indicates that the wakeup signal monitoring apparatus 50 is capable of sending the configuration preference information, the switch configuration information includes at least one of the following: target indication information; a preferred preamble range; and a preferred payload data range, where the target indication information is used to indicate whether the wakeup signal monitoring apparatus 50 is capable of sending the device information of the wakeup signal monitoring apparatus 50 to the network device.

In a possible implementation, the receiving module 51 is specifically configured to receive a third message from the network device, where the third message includes the switch configuration information, where the third message includes at least one of the following: a NAS message and an RRC message; the NAS message includes any one of the following: a registration accept message, a service accept message, and a tracking area update accept message; and the RRC message includes an RRC reconfiguration message.

In a possible implementation, the preferred preamble range includes at least one of the following: a preferred preamble type; a preferred preamble length; and an eighth indication, where the eighth indication is used to indicate whether the preamble of the target wakeup signal is allowed to be a dynamic preamble; and a preamble type or length of the dynamic preamble is variable.

In a possible implementation, the preferred payload data range includes at least one of the following: a preferred payload data type; a preferred data length of the payload data; and a ninth indication, where the ninth indication is used to indicate whether the payload data of the target wakeup signal is allowed to be dynamic payload data; and a payload data type, a data length, or a duration of the dynamic payload data is variable.

According to the wakeup signal monitoring apparatus provided in this embodiment of this application, because the network device may send the configuration parameter used to configure the parameter for monitoring the wakeup signal to the wakeup signal monitoring apparatus, the wakeup signal monitoring apparatus can monitor the target wakeup signal based on the configuration parameter. In other words, the wakeup signal monitoring apparatus can accurately monitor the target wakeup signal based on at least one of the following: the configuration parameter corresponding to the preamble, the configuration parameter of the payload data, the time domain resource of the wakeup signal, the frequency domain resource of the wakeup signal, the transmission period parameter of the wakeup signal, the identity of the target terminal group, the quantity of terminal groups, the parameter of the terminal information carried by the preamble, and the parameter of the terminal information carried by the payload data. Therefore, a case that the network device does not page the wakeup signal monitoring apparatus, but the wakeup signal monitoring apparatus controls a main communication module to be in a working state to receive a paging message can be avoided, and power consumption of the wakeup signal monitoring apparatus can be reduced.

The wakeup signal monitoring apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The wakeup signal monitoring apparatus provided in this embodiment of this application can implement each process implemented in the method embodiments in FIG. 1 to FIG. 4, with the same technical effect achieved. To avoid repetition, details are not described herein again.

The wakeup signal monitoring method provided in the embodiments of this application may be performed by a wakeup signal monitoring apparatus. A wakeup signal monitoring apparatus provided in the embodiments of this application is described by assuming that the wakeup signal monitoring method is performed by the wakeup signal monitoring apparatus in the embodiments of this application.

FIG. 6 is a schematic diagram of a possible structure of a wakeup signal monitoring apparatus according to an embodiment of this application. As shown in FIG. 6, the wakeup signal monitoring apparatus 60 includes a sending module 61.

The sending module 61 is configured to send a configuration parameter to a first terminal. The configuration parameter is used by the first terminal to configure a parameter for monitoring a wakeup signal, so that the first terminal monitors a target wakeup signal based on the configuration parameter, where the target wakeup signal is used to wake up or page the first terminal, where the configuration parameter includes at least one of the following: a configuration parameter corresponding to a preamble; a configuration parameter of payload data; a time domain resource of the wakeup signal; a frequency domain resource of the wakeup signal; a transmission period parameter of the wakeup signal; an identity of a target terminal group to which the first terminal belongs; the quantity of terminal groups; a parameter of terminal information carried by the preamble; and a parameter of terminal information carried by the payload data.

In a possible implementation, the configuration parameter corresponding to the preamble includes at least one of the following: an index of the preamble; an index of the wakeup signal; the quantity of preambles; the quantity of wakeup signals; a length of the preamble; a first indication; a second indication; and N preamble types, where the first indication is used to indicate that the length of the preamble is fixed or variable; the second indication is used to indicate the first terminal to determine the length of the preamble based on the detected preamble; and N is a positive integer.

In a possible implementation, the configuration parameter of the payload data includes at least one of the following: a duration of the payload data; a third indication; a data rate of the payload data; a data length carried by the payload data; a fourth indication; and M payload data types, where the third indication is used to indicate that the duration of the payload data is fixed or variable; the fourth indication is used to indicate that the data length carried by the payload data is fixed or variable; and M is a positive integer.

In a possible implementation, the time domain resource includes X time domain resources, the frequency domain resource includes Y frequency domain resources, and both X and Y are positive integers, where different time domain resources correspond to different preamble types, or different time domain resources correspond to different preamble indexes, or different time domain resources correspond to different terminal groups; and different frequency domain resources correspond to different preamble types, or different frequency domain resources correspond to different preamble indexes, or different frequency domain resources correspond to different terminal groups.

In a possible implementation, the transmission period parameter includes at least one of the following: a period of the wakeup signal, a duration of the wakeup signal, and a start transmission time of the wakeup signal.

In a possible implementation, the identity of the target terminal group includes at least one of the following: an identity calculated based on a terminal identity of the first terminal and an identity configured by the wakeup signal monitoring apparatus 60.

In a possible implementation, the parameter of the terminal information carried by the preamble includes at least one of the following: the quantity of bits of the terminal information carried by the preamble and a bit range of a terminal identity corresponding to the terminal information carried by the preamble.

In a possible implementation, the parameter of the terminal information carried by the payload data includes at least one of the following: an amount of the terminal information carried by the payload data; a data length of each piece of terminal information carried by the payload data; a bit range of a terminal identity corresponding to the terminal information carried by the payload data; an amount of terminal group information carried by the payload data; and a data length of each piece of terminal group information carried by the payload data.

In a possible implementation, the terminal identity includes at least one of the following: at least some bits of a temporary mobile subscriber identity, a hashed identity, at least a part of an international mobile equipment identity, and an equipment identity.

In a possible implementation, the equipment identity is a unique identity allocated by the wakeup signal monitoring apparatus 60.

In a possible implementation, the sending module 61 is specifically configured to send a first message to the first terminal, where the first message includes the configuration parameter, where the first message includes at least one of the following: a system information broadcast message, a NAS message, and an RRC message; the NAS message includes either of the following: a service accept message and a tracking area update accept message; and the RRC message includes either of the following: an RRC reconfiguration message and an RRC release message.

In a possible implementation, the wakeup signal monitoring apparatus 60 provided in this embodiment of this application may further include a receiving module, where the receiving module is configured to receive configuration preference information from the first terminal, where the configuration preference information is used to indicate a preference of the first terminal for the target wakeup signal; and the sending module 61 is configured to determine the configuration parameter based on the configuration preference information received by the receiving module, where the configuration preference information includes at least one of the following: device information of the first terminal; preamble preference information; and payload data preference information.

In a possible implementation, the receiving module is specifically configured to receive a second message from the first terminal, where the second message includes the configuration preference information, where the second message includes at least one of the following: a NAS message and an RRC message; the NAS message includes any one of the following: a registration request message, a service request message, and a tracking area update request message; and the RRC message includes terminal assistance information.

In a possible implementation, the preamble preference information includes at least one of the following: a fifth indication; T preferred preamble types; and a preferred preamble length, where the fifth indication is used to indicate that the first terminal prefers the preamble of the target wakeup signal to be a dynamic preamble; a preamble type or length of the dynamic preamble is variable; and T is a positive integer.

In a possible implementation, the payload data preference information includes at least one of the following: a sixth indication; a seventh indication; a preferred payload data type; a preferred data length of the payload data; and a preferred data rate of the payload data, where the sixth indication is used to indicate that the first terminal prefers the target wakeup signal sent by the wakeup signal monitoring apparatus 60 to carry the payload data or not; the seventh indication is used to indicate that the first terminal prefers the payload data of the target wakeup signal to be dynamic payload data; and a payload data type, a data length, or a duration of the dynamic payload data is variable.

In a possible implementation, the sending module 61 is further configured to send switch configuration information to the first terminal, where the switch configuration information is used to indicate whether the first terminal is capable of sending the configuration preference information, where the configuration preference information is sent in a case that the switch configuration information indicates that the first terminal is capable of sending the configuration preference information; and in the case that the switch configuration information indicates that the first terminal is capable of sending the configuration preference information, the switch configuration information includes at least one of the following: target indication information; a preferred preamble range; and a preferred payload data range, where the target indication information is used to indicate whether the first terminal is capable of sending the device information of the first terminal to the wakeup signal monitoring apparatus 60.

In a possible implementation, the sending module 61 is specifically configured to send a third message to the first terminal, where the third message includes the switch configuration information, where the third message includes at least one of the following: a NAS message and an RRC message; the NAS message includes any one of the following: a registration accept message, a service accept message, and a tracking area update accept message; and the RRC message includes an RRC reconfiguration message.

In a possible implementation, the preferred preamble range includes at least one of the following: a preferred preamble type; a preferred preamble length; and an eighth indication, where the eighth indication is used to indicate whether the preamble of the target wakeup signal is allowed to be a dynamic preamble; and a preamble type or length of the dynamic preamble is variable.

In a possible implementation, the preferred payload data range includes at least one of the following: a preferred payload data type; a preferred data length of the payload data; and a ninth indication, where the ninth indication is used to indicate whether the payload data of the target wakeup signal is allowed to be dynamic payload data; and a payload data type, a data length, or a duration of the dynamic payload data is variable.

In a possible implementation, the receiving module is further configured to receive second information from the first terminal, where the second information is used to indicate a type of wakeup signal supported by the first terminal; and the wakeup signal monitoring apparatus 60 provided in this embodiment of this application may further include a determining module, where the determining module is configured to determine third information based on the second information received by the receiving module, where the third information includes at least one of the following: the configuration parameter and the switch configuration information.

According to the wakeup signal monitoring apparatus provided in this embodiment of this application, because the wakeup signal monitoring apparatus may send the configuration parameter used to configure the parameter for monitoring the wakeup signal to the first terminal, the first terminal can monitor the target wakeup signal based on the configuration parameter. In other words, the first terminal can accurately monitor the target wakeup signal based on at least one of the configuration parameter corresponding to the preamble, the configuration parameter of the payload data, the time domain resource of the wakeup signal, the frequency domain resource of the wakeup signal, the transmission period parameter of the wakeup signal, the identity of the target terminal group, the quantity of terminal groups, the parameter of the terminal information carried by the preamble, and the parameter of the terminal information carried by the payload data. Therefore, a case that the wakeup signal monitoring apparatus does not page the first terminal, but the first terminal controls a main communication module to be in a working state to receive a paging message can be avoided, and power consumption of the first terminal can be reduced.

The wakeup signal monitoring apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The wakeup signal monitoring apparatus provided in this embodiment of this application can implement each process implemented in the method embodiments in FIG. 1 to FIG. 4, with the same technical effect achieved. To avoid repetition, details are not described herein again.

Optionally, in an embodiment of this application, as shown in FIG. 7, an embodiment of this application further provides a communication device 70, including a processor 71 and a memory 72. The memory 72 stores a program or instructions executable on the processor 71. For example, when the communication device 70 is a terminal, and the program or instructions are executed by the processor 71, the steps of the foregoing embodiment of the wakeup signal monitoring method are implemented, with the same technical effect achieved. When the communication device 70 is a network device, and the program or instructions are executed by the processor 71, the steps of the foregoing embodiment of the wakeup signal monitoring method are implemented, with the same technical effect achieved. To avoid repetition, details are not described herein again.

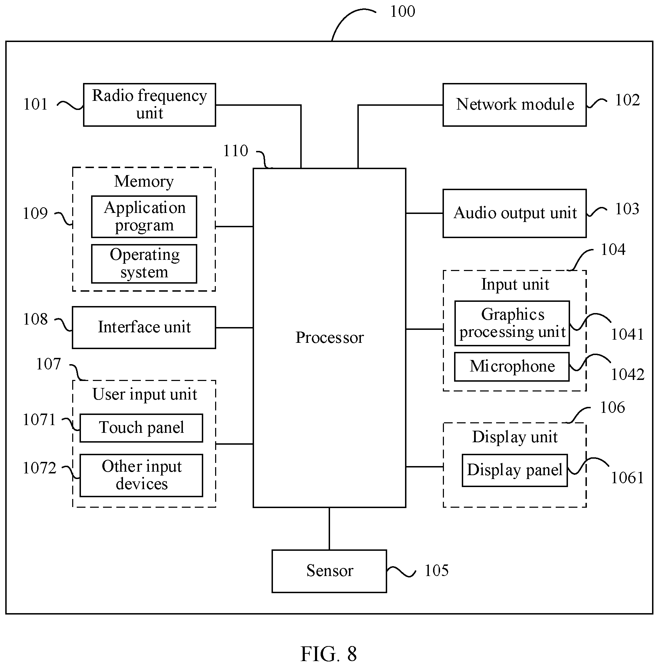

An embodiment of this application further provides a terminal. The terminal is a first terminal, and the first terminal includes a processor and a communication interface. The communication interface is configured to receive a configuration parameter from a network device, where the configuration parameter is used to configure a parameter for monitoring a wakeup signal. The processor is configured to monitor a target wakeup signal based on the configuration parameter, where the target wakeup signal is used to wake up or page the first terminal. The terminal embodiment corresponds to the foregoing terminal-side method embodiment, and each implementation process and implementation of the foregoing method embodiment can be applied to the terminal embodiment, with the same technical effect achieved. Specifically, FIG. 8 is a schematic diagram of a hardware structure of a terminal for implementing an embodiment of this application.

A first terminal 100 includes but is not limited to at least some components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the first terminal 100 may further include a power supply (for example, a battery) supplying power to all components. The power supply may be logically connected to the processor 110 through a power management system. In this way, functions such as charge management, discharge management, and power consumption management are implemented by using the power management system. The terminal structure shown in FIG. 8 does not constitute a limitation on the terminal. The terminal may include more or fewer components than those shown in the figure, or some components are combined, or component arrangements are different. Details are not described herein again.

It should be understood that, in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (such as a volume control button or a power button), a trackball, a mouse, and a joystick. Details are not described herein again.

In this embodiment of this application, after receiving downlink data from a network device, the radio frequency unit 101 may transmit the downlink data to the processor 110 for processing. In addition, the radio frequency unit 101 may send uplink data to the network device. Usually, the radio frequency unit 101 includes but is not limited to an antenna, an amplifier, a transceiver, a coupler, a low noise amplifier, a duplexer, and the like.

The memory 109 may be configured to store software programs or instructions and various data. The memory 109 may primarily include a first storage area for storing programs or instructions and a second storage area for storing data. The first storage area may store an operating system, an application program or instructions required by at least one function (such as an audio play function and an image play function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 109 in this embodiment of this application includes but is not limited to these and any other suitable types of memories.

The processor 110 may include one or more processing units. Optionally, the processor 110 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 110.

The radio frequency unit 101 is configured to receive a configuration parameter from a network device, where the configuration parameter is used to configure a parameter for monitoring a wakeup signal.

The processor 110 is configured to monitor a target wakeup signal based on the configuration parameter.

The target wakeup signal is used to wake up or page the first terminal; the configuration parameter includes at least one of the following: a configuration parameter corresponding to a preamble; a configuration parameter of payload data; a time domain resource of the wakeup signal; a frequency domain resource of the wakeup signal; a transmission period parameter of the wakeup signal; an identity of a target terminal group to which the first terminal belongs; the quantity of terminal groups; a parameter of terminal information carried by the preamble; and a parameter of terminal information carried by the payload data.

According to the terminal provided in this embodiment of this application, the terminal is the first terminal. Because the network device may send the configuration parameter used to configure the parameter for monitoring the wakeup signal to the first terminal, the first terminal can monitor the target wakeup signal based on the configuration parameter. In other words, the first terminal can accurately monitor the target wakeup signal based on at least one of the following: the configuration parameter corresponding to the preamble, the configuration parameter of the payload data, the time domain resource of the wakeup signal, the frequency domain resource of the wakeup signal, the transmission period parameter of the wakeup signal, the identity of the target terminal group, the quantity of terminal groups, the parameter of the terminal information carried by the preamble, and the parameter of the terminal information carried by the payload data. Therefore, a case that the network device does not page the first terminal but the first terminal controls a main communication module to be in a working state to receive a paging message can be avoided, and power consumption of the first terminal can be reduced.

Optionally, in this embodiment of this application, the radio frequency unit 101 is specifically configured to receive a first message from the network device, where the first message includes the configuration parameter, where

the first message includes at least one of the following: a system information broadcast message, a NAS message, and an RRC message; the NAS message includes either of the following: a service accept message and a tracking area update accept message; and the RRC message includes either of the following: an RRC reconfiguration message and an RRC release message.

Optionally, in this embodiment of this application, the radio frequency unit 101 is further configured to send second information to the network device, where the second information is used to indicate a type of wakeup signal supported by the first terminal.

Optionally, in this embodiment of this application, the radio frequency unit 101 is further configured to send configuration preference information to the network device, where the configuration preference information is used to indicate a preference of the first terminal for the target wakeup signal, where

the configuration preference information includes at least one of the following: device information of the first terminal; preamble preference information; and payload data preference information.

Optionally, in this embodiment of this application, the radio frequency unit 101 is specifically configured to send a second message to the network device, where the second message includes the configuration preference information, where

the second message includes at least one of the following: a NAS message and an RRC message; the NAS message includes any one of the following: a registration request message, a service request message, and a tracking area update request message; and the RRC message includes terminal assistance information.

Optionally, in this embodiment of this application, the radio frequency unit 101 is further configured to receive switch configuration information from the network device, where the switch configuration information is used to indicate whether the first terminal is capable of sending the configuration preference information.

The radio frequency unit 101 is specifically configured to send the configuration preference information to the network device based on the switch configuration information in a case that the switch configuration information indicates that the first terminal is capable of sending the configuration preference information, where

in the case that the switch configuration information indicates that the first terminal is capable of sending the configuration preference information, the switch configuration information includes at least one of the following: target indication information; a preferred preamble range; and a preferred payload data range, where the target indication information is used to indicate whether the first terminal is capable of sending the device information of the first terminal to the network device.

Optionally, in this embodiment of this application, the radio frequency unit 101 is specifically configured to receive a third message from the network device, where the third message includes the switch configuration information, where the third message includes at least one of the following: a NAS message and an RRC message; the NAS message includes any one of the following: a registration accept message, a service accept message, and a tracking area update accept message; and the RRC message includes an RRC reconfiguration message.

An embodiment of this application further provides a network device, including a processor and a communication interface. The communication interface is configured to send a configuration parameter to a first terminal. The configuration parameter is used by the first terminal to configure a parameter for monitoring a wakeup signal, so that the first terminal monitors a target wakeup signal based on the configuration parameter, where the target wakeup signal is used to wake up or page the first terminal, where the configuration parameter includes at least one of the following: a configuration parameter corresponding to a preamble; a configuration parameter of payload data; a time domain resource of the wakeup signal; a frequency domain resource of the wakeup signal; a transmission period parameter of the wakeup signal; an identity of a target terminal group to which the first terminal belongs; the quantity of terminal groups; a parameter of terminal information carried by the preamble; and a parameter of terminal information carried by the payload data. The network device embodiment corresponds to the foregoing method embodiment of the network device, and each implementation process and implementation of the foregoing method embodiment can be applied to the network device embodiment, with the same technical effect achieved.

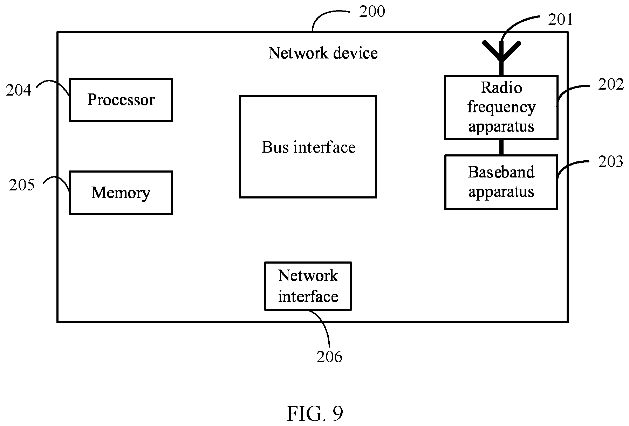

Specifically, an embodiment of this application further provides a network device. As shown in FIG. 9, the network device 200 includes an antenna 201, a radio frequency apparatus 202, a baseband apparatus 203, a processor 204, and a memory 205. The antenna 201 is connected to the radio frequency apparatus 202. In an uplink direction, the radio frequency apparatus 202 receives information by using the antenna 201, and sends the received information to the baseband apparatus 203 for processing. In a downlink direction, the baseband apparatus 203 processes to-be-sent information, and sends the information to the radio frequency apparatus 202; and the radio frequency apparatus 202 processes the received information and then sends the information out by using the antenna 201.

The method performed by the network device in the foregoing embodiment may be implemented in the baseband apparatus 203. The baseband apparatus 203 includes a baseband processor.

The baseband apparatus 203 may include, for example, at least one baseband unit, where a plurality of chips are disposed on the baseband unit. As shown in FIG. 9, one of the chips is, for example, the baseband processor, connected to the memory 205 by using a bus interface, to invoke a program in the memory 205 to perform the operation of the network device shown in the foregoing method embodiment.

The network device may further include a network interface 206, where the interface is, for example, a common public radio interface (common public radio interface, CPRI).

Specifically, the network device 200 in this embodiment of the present invention further includes a program or instructions stored in the memory 205 and executable on the processor 204. When the processor 204 invokes the program or instructions in the memory 205, the method performed by each module shown in FIG. 9 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the wakeup signal monitoring method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the wakeup signal monitoring method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the wakeup signal monitoring method, with the same technical effect achieved. To avoid repetition, details are not described herein again.

An embodiment of this application further provides a wakeup signal monitoring system, including a terminal and a network device. The terminal may be configured to perform the steps of the foregoing wakeup signal monitoring method. The network device may be configured to perform the steps of the foregoing wakeup signal monitoring method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

**Claims**

1. A wakeup signal monitoring method, comprising:

   receiving, by a first terminal, a configuration parameter from a network device, wherein the configuration parameter is used to configure a parameter for monitoring a wakeup signal; and
   monitoring, by the first terminal, a target wakeup signal based on the configuration parameter, wherein the target wakeup signal is used to wake up or page the first terminal, wherein
   the configuration parameter comprises at least one of the following:

      a configuration parameter corresponding to a preamble;
      a configuration parameter of payload data;
      a time domain resource of the wakeup signal;
      a frequency domain resource of the wakeup signal;
      a transmission period parameter of the wakeup signal;
      an identity of a target terminal group to which the first terminal belongs;
      the quantity of terminal groups;
      a parameter of terminal information carried by the preamble; and
      a parameter of terminal information carried by the payload data.

2. The method according to claim 1, wherein the configuration parameter corresponding to the preamble comprises at least one of the following:

an index of the preamble;
an index of the wakeup signal;
the quantity of preambles;
the quantity of wakeup signals;
a length of the preamble;
a first indication;
a second indication; and
N preamble types, wherein
the first indication is used to indicate that the length of the preamble is fixed or variable; the second indication is used to indicate the first terminal to determine the length of the preamble based on a detected preamble; and N is a positive integer.

3. The method according to claim 1, wherein the configuration parameter of the payload data comprises at least one of the following:

a duration of the payload data;
a third indication;
a data rate of the payload data;
a data length carried by the payload data;
a fourth indication; and
M payload data types, wherein
the third indication is used to indicate that the duration of the payload data is fixed or variable; the fourth indication is used to indicate that the data length carried by the payload data is fixed or variable; and M is a positive integer.

4. The method according to claim 1, wherein the time domain resource comprises X time domain resources, the frequency domain resource comprises Y frequency domain resources, and both X and Y are positive integers, wherein

different time domain resources correspond to different preamble types, or different time domain resources correspond to different preamble indexes, or different time domain resources correspond to different terminal groups; and
different frequency domain resources correspond to different preamble types, or different frequency domain resources correspond to different preamble indexes, or different frequency domain resources correspond to different terminal groups.

5. The method according to claim 1, wherein the transmission period parameter comprises at least one of the following: a transmission period of the wakeup signal, a duration of the wakeup signal, and a start transmission time of the wakeup signal.

6. The method according to claim 1, wherein the identity of the target terminal group comprises at least one of the following:
an identity calculated based on a terminal identity of the first terminal and an identity configured by the network device.

7. The method according to claim 1, wherein the parameter of the terminal information carried by the preamble comprises at least one of the following:
the quantity of bits of the terminal information carried by the preamble and a bit range of a terminal identity corresponding to the terminal information carried by the preamble.

8. The method according to claim 1, wherein the parameter of the terminal information carried by the payload data comprises at least one of the following:

an amount of the terminal information carried by the payload data;
a data length of each piece of terminal information carried by the payload data;
a bit range of a terminal identity corresponding to the terminal information carried by the payload data;
an amount of terminal group information carried by the payload data; and
a data length of each piece of terminal group information carried by the payload data.

9. The method according to claim 7 or 8, wherein the terminal identity comprises at least one of the following:

at least some bits of a temporary mobile subscriber identity, a hashed identity, at least a part of an international mobile equipment identity, and an equipment identity.

10. The method according to claim 9, wherein the equipment identity is a unique identity allocated by the network device.

11. The method according to claim 1, wherein the monitoring, by the first terminal, the target wakeup signal based on the configuration parameter comprises:

determining, by the first terminal, first information based on the configuration parameter; and
determining, by the first terminal, that a first wakeup signal is the target wakeup signal, wherein information of the first wakeup signal matches the first information, wherein
the first information comprises any one of the following:

a target wakeup signal index;
a target preamble index;
a target preamble type; and
a target resource location, wherein
the target resource location comprises at least one of a target time domain resource location and a target frequency domain resource location.

12. The method according to claim 11, wherein the configuration parameter comprises the configuration parameter corresponding to the preamble, and the configuration parameter corresponding to the preamble comprises the quantity of wakeup signals; and the first information comprises the target wakeup signal index; and
the determining, by the first terminal, the first information based on the configuration parameter comprises:
determining, by the first terminal, the target wakeup signal index based on the quantity of wakeup signals and a terminal identity of the first terminal.

13. The method according to claim 11, wherein the configuration parameter comprises the configuration parameter corresponding to the preamble and the identity of the target terminal group, and the configuration parameter corresponding to the preamble comprises the quantity of wakeup signals; and the first information comprises the target wakeup signal index; and
the determining, by the first terminal, the first information based on the configuration parameter comprises:
determining, by the first terminal, the target wakeup signal index based on the identity of the target terminal group and the quantity of wakeup signals.

14. The method according to claim 1, wherein the monitoring, by the first terminal, the target wakeup signal based on the configuration parameter comprises:

decoding, by the first terminal, a second wakeup signal based on the configuration parameter to obtain a target identity, wherein
in a case that the target identity matches a terminal identity of the first terminal, the first terminal determines that the second wakeup signal is the target wakeup signal.

15. The method according to claim 1, wherein the receiving, by the first terminal, the configuration parameter from the network device comprises:

receiving, by the first terminal, a first message from the network device, wherein the first message comprises the configuration parameter, wherein
the first message comprises at least one of the following: a system information broadcast message, a non-access stratum NAS message, and a radio resource control RRC message; and
the NAS message comprises either of the following: a service accept message and a tracking area update accept message; and the RRC message comprises either of the following: an RRC reconfiguration message and an RRC release message.

16. The method according to claim 1, wherein before the receiving, by the first terminal, the configuration parameter from the network device, the method further comprises:
sending, by the first terminal, second information to the network device, wherein the second information is used to indicate a type of wakeup signal supported by the first terminal.

**17.** The method according to claim 1, wherein the method further comprises:

sending, by the first terminal, configuration preference information to the network device, wherein the configuration preference information is used to indicate a preference of the first terminal for the target wakeup signal, wherein

the configuration preference information comprises at least one of the following:

device information of the first terminal;
preamble preference information; and
payload data preference information.

**18.** The method according to claim 17, wherein the preamble preference information comprises at least one of the following:

a fifth indication;
T preferred preamble types; and
a preferred preamble length, wherein
the fifth indication is used to indicate that the first terminal prefers the preamble of the target wakeup signal to be a dynamic preamble; a preamble type or length of the dynamic preamble is variable; and T is a positive integer.

**19.** The method according to claim 17, wherein the payload data preference information comprises at least one of the following:

a sixth indication;
a seventh indication;
a preferred payload data type;
a preferred data length of the payload data; and
a preferred data rate of the payload data, wherein
the sixth indication is used to indicate that the first terminal prefers the target wakeup signal sent by the network device to carry the payload data or not; the seventh indication is used to indicate that the first terminal prefers the payload data of the target wakeup signal to be dynamic payload data; and a payload data type, a data length, or a duration of the dynamic payload data is variable.

**20.** The method according to claim 17, wherein before the sending, by the first terminal, the configuration preference information to the network device, the method further comprises:

receiving, by the first terminal, switch configuration information from the network device, wherein the switch configuration information is used to indicate whether the first terminal is capable of sending the configuration preference information; and
the sending, by the first terminal, the configuration preference information to the network device comprises:

in a case that the switch configuration information indicates that the first terminal is capable of sending the configuration preference information, sending, by the first terminal, the configuration preference information to the network device based on the switch configuration information, wherein
in the case that the switch configuration information indicates that the first terminal is capable of sending the configuration preference information, the switch configuration information comprises at least one of the following:

target indication information;
a preferred preamble range; and
a preferred payload data range, wherein
the target indication information is used to indicate whether the first terminal is capable of sending the device information of the first terminal to the network device.

**21.** The method according to claim 20, wherein the preferred preamble range comprises at least one of the following:

a preferred preamble type;
a preferred preamble length; and

an eighth indication, wherein
the eighth indication is used to indicate whether the preamble of the target wakeup signal is allowed to be a dynamic preamble; and a preamble type or length of the dynamic preamble is variable.

22. The method according to claim 20, wherein the preferred payload data range comprises at least one of the following:

a preferred payload data type;
a preferred data length of the payload data; and
a ninth indication, wherein
the ninth indication is used to indicate whether the payload data of the target wakeup signal is allowed to be dynamic payload data; and a payload data type, a data length, or a duration of the dynamic payload data is variable.

23. A wakeup signal monitoring method, comprising:

sending, by a network device, a configuration parameter to a first terminal, wherein
the configuration parameter is used to configure a parameter for monitoring a wakeup signal by the first terminal, so that the first terminal monitors a target wakeup signal based on the configuration parameter, wherein the target wakeup signal is used to wake up or page the first terminal, wherein
the configuration parameter comprises at least one of the following:

a configuration parameter corresponding to a preamble;
a configuration parameter of payload data;
a time domain resource of the wakeup signal;
a frequency domain resource of the wakeup signal;
a transmission period parameter of the wakeup signal;
an identity of a target terminal group to which the first terminal belongs;
the quantity of terminal groups;
a parameter of terminal information carried by the preamble; and
a parameter of terminal information carried by the payload data.

24. The method according to claim 23, wherein the method further comprises:

receiving, by the network device, configuration preference information from the first terminal, wherein the configuration preference information is used to indicate a preference of the first terminal for the target wakeup signal; and
determining, by the network device, the configuration parameter based on the configuration preference information, wherein
the configuration preference information comprises at least one of the following:

device information of the first terminal;
preamble preference information; and
payload data preference information.

25. The method according to claim 24, wherein before the receiving, by the network device, the configuration preference information from the first terminal, the method further comprises:

sending, by the network device, switch configuration information to the first terminal, wherein the switch configuration information is used to indicate whether the first terminal is capable of sending the configuration preference information, wherein
the configuration preference information is sent in a case that the switch configuration information indicates that the first terminal is capable of sending the configuration preference information; and
in the case that the switch configuration information indicates that the first terminal is capable of sending the configuration preference information, the switch configuration information comprises at least one of the following:

target indication information;
a preferred preamble range; and
a preferred payload data range, wherein

the target indication information is used to indicate whether the first terminal is capable of sending the device information of the first terminal to the network device.

26. The method according to claim 25, wherein before the sending, by the network device, the switch configuration information to the first terminal, the method further comprises:

receiving, by the network device, second information from the first terminal, wherein the second information is used to indicate a type of wakeup signal supported by the first terminal; and
determining, by the network device, third information based on the second information, wherein
the third information comprises at least one of the following: the configuration parameter and the switch configuration information.

27. A wakeup signal monitoring apparatus, wherein the wakeup signal monitoring apparatus comprises a receiving module and a monitoring module, wherein

the receiving module is configured to receive a configuration parameter from a network device, wherein the configuration parameter is used to configure a parameter for monitoring a wakeup signal; and
the monitoring module is configured to monitor a target wakeup signal based on the configuration parameter received by the receiving module, wherein the target wakeup signal is used to wake up or page the wakeup signal monitoring apparatus, wherein
the configuration parameter comprises at least one of the following:

a configuration parameter corresponding to a preamble;
a configuration parameter of payload data;
a time domain resource of the wakeup signal;
a frequency domain resource of the wakeup signal;
a transmission period parameter of the wakeup signal;
an identity of a target terminal group to which the wakeup signal monitoring apparatus belongs;
the quantity of terminal groups;
a parameter of terminal information carried by the preamble; and
a parameter of terminal information carried by the payload data.

28. The wakeup signal monitoring apparatus according to claim 27, wherein the monitoring module is specifically configured to determine first information based on the configuration parameter, and determine that a first wakeup signal is the target wakeup signal, wherein information of the first wakeup signal matches the first information, wherein the first information comprises any one of the following:

a target wakeup signal index;
a target preamble index;
a target preamble type; and
a target resource location, wherein
the target resource location comprises at least one of a target time domain resource location and a target frequency domain resource location.

29. The wakeup signal monitoring apparatus according to claim 28, wherein the monitoring module is specifically configured to decode a second wakeup signal based on the configuration parameter to obtain a target identity, wherein in a case that the target identity matches a terminal identity of the wakeup signal monitoring apparatus, the wakeup signal monitoring apparatus determines that the second wakeup signal is the target wakeup signal.

30. The wakeup signal monitoring apparatus according to claim 27, wherein the wakeup signal monitoring apparatus further comprises a sending module, wherein

the sending module is configured to send configuration preference information to the network device, wherein the configuration preference information is used to indicate a preference of the wakeup signal monitoring apparatus for the target wakeup signal, wherein
the configuration preference information comprises at least one of the following:

device information of the wakeup signal monitoring apparatus;

preamble preference information; and
payload data preference information.

31. The wakeup signal monitoring apparatus according to claim 30, wherein the receiving module is further configured to receive switch configuration information from the network device, wherein the switch configuration information is used to indicate whether the wakeup signal monitoring apparatus is capable of sending the configuration preference information; and

the sending module is specifically configured to send, by the wakeup signal monitoring apparatus, the configuration preference information to the network device based on the switch configuration information in a case that the switch configuration information indicates that the wakeup signal monitoring apparatus is capable of sending the configuration preference information, wherein
in the case that the switch configuration information indicates that the wakeup signal monitoring apparatus is capable of sending the configuration preference information, the switch configuration information comprises at least one of the following:

target indication information;
a preferred preamble range; and
a preferred payload data range, wherein
the target indication information is used to indicate whether the wakeup signal monitoring apparatus is capable of sending the device information of the wakeup signal monitoring apparatus to the network device.

32. The wakeup signal monitoring apparatus according to claim 31, wherein the preferred preamble range comprises at least one of the following:

a preferred preamble type;
a preferred preamble length; and
an eighth indication, wherein
the eighth indication is used to indicate whether the preamble of the target wakeup signal is allowed to be a dynamic preamble; and a preamble type or length of the dynamic preamble is variable.

33. The wakeup signal monitoring apparatus according to claim 31, wherein the preferred payload data range comprises at least one of the following:

a preferred payload data type;
a preferred data length of the payload data; and
a ninth indication, wherein
the ninth indication is used to indicate whether the payload data of the target wakeup signal is allowed to be dynamic payload data; and a payload data type, a data length, or a duration of the dynamic payload data is variable.

34. A wakeup signal monitoring apparatus, wherein the wakeup signal monitoring apparatus comprises a sending module, wherein

the sending module is configured to send a configuration parameter to a first terminal, wherein
the configuration parameter is used to configure a parameter for monitoring a wakeup signal by the first terminal, so that the first terminal monitors a target wakeup signal based on the configuration parameter, wherein the target wakeup signal is used to wake up or page the first terminal, wherein
the configuration parameter comprises at least one of the following:

a configuration parameter corresponding to a preamble;
a configuration parameter of payload data;
a time domain resource of the wakeup signal;
a frequency domain resource of the wakeup signal;
a transmission period parameter of the wakeup signal;
an identity of a target terminal group to which the first terminal belongs;
the quantity of terminal groups;
a parameter of terminal information carried by the preamble; and

a parameter of terminal information carried by the payload data.

35. The wakeup signal monitoring apparatus according to claim 34, wherein the wakeup signal monitoring apparatus further comprises a receiving module, wherein

the receiving module is configured to receive configuration preference information from the first terminal, wherein the configuration preference information is used to indicate a preference of the first terminal for the target wakeup signal; and
the sending module is further configured to determine the configuration parameter based on the configuration preference information received by the receiving module, wherein
the configuration preference information comprises at least one of the following:

device information of the first terminal;
preamble preference information; and
payload data preference information.

36. The wakeup signal monitoring apparatus according to claim 35, wherein the sending module is further configured to send switch configuration information to the first terminal, wherein the switch configuration information is used to indicate whether the first terminal is capable of sending the configuration preference information, wherein

the configuration preference information is sent in a case that the switch configuration information indicates that the first terminal is capable of sending the configuration preference information; and
in the case that the switch configuration information indicates that the first terminal is capable of sending the configuration preference information, the switch configuration information comprises at least one of the following:

target indication information;
a preferred preamble range; and
a preferred payload data range, wherein
the target indication information is used to indicate whether the first terminal is capable of sending the device information of the first terminal to the wakeup signal monitoring apparatus.

37. The wakeup signal monitoring apparatus according to claim 36, wherein the receiving module is further configured to receive second information from the first terminal, wherein the second information is used to indicate a type of wakeup signal supported by the first terminal; and

the wakeup signal monitoring apparatus further comprises a determining module, wherein
the determining module is configured to determine third information based on the second information received by the receiving module, wherein
the third information comprises at least one of the following: the configuration parameter and the switch configuration information.

38. A terminal, comprising a processor and a memory, wherein the memory stores a program or instructions executable on the processor, and when the program or instructions are executed by the processor, the steps of the wakeup signal monitoring method according to any one of claims 1 to 22 are implemented.

39. A network device, comprising a processor and a memory, wherein the memory stores a program or instructions executable on the processor, and when the program or instructions are executed by the processor, the steps of the wakeup signal monitoring method according to any one of claims 23 to 26 are implemented.

40. A readable storage medium, wherein the readable storage medium stores a program or instructions, and when the program or instructions are executed by a processor, the wakeup signal monitoring method according to any one of claims 1 to 26 are implemented.

FIG. 1

| First terminal | Network device |

101. Send a configuration parameter to
the first terminal

102. Receive the configuration parameter
from the network device

103. Monitor a target wakeup signal
based on the configuration parameter

FIG. 2

First terminal

Network device

201. Send configuration preference
information to the network device

202. Receive the configuration preference
information from the first terminal

203. Determine a configuration parameter based
on the configuration preference information

101. Send the configuration parameter to
the first terminal

102. Receive the configuration parameter
from the network device

103. Monitor a target wakeup signal
based on the configuration parameter

FIG. 3

FIG. 4

```
┌─────────────────────────────────────────────┐
│                                          ╱─── 50
│  Wakeup signal monitoring apparatus      │
│                                          │
│    ┌─────────────────────────────┐   ╱─── 51
│    │      Receiving module       │──┘  │
│    └─────────────┬───────────────┘     │
│                  │                      │
│    ┌─────────────┴───────────────┐  ╱─── 52
│    │      Monitoring module      │──┘  │
│    └─────────────────────────────┘     │
│                                         │
└─────────────────────────────────────────┘
```

FIG. 5

```
┌─────────────────────────────────────────────┐
│                                          ╱─── 60
│  Wakeup signal monitoring apparatus      │
│                                          │
│                                          │
│    ┌─────────────────────────────┐  ╱─── 61
│    │       Sending module        │──┘  │
│    └─────────────────────────────┘     │
│                                         │
└─────────────────────────────────────────┘
```

FIG. 6

```
                            ╱─── 70
┌─────────────────────────────────────────────┐
│            Communication device              │
│                                              │
│  71 ╱  ┌───────────┐      ┌───────────┐  ╲ 72 │
│     ╲  │ Processor │◄════►│  Memory   │  ╱    │
│        └───────────┘      └───────────┘       │
│                                              │
└─────────────────────────────────────────────┘
```

FIG. 7

FIG. 8

FIG. 9

## INTERNATIONAL SEARCH REPORT

| | International application No. |
|---|---|
| | **PCT/CN2023/104625** |

### A. CLASSIFICATION OF SUBJECT MATTER

H04W 52/02(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE: 唤醒信号, 配置参数, 唤醒, 寻呼, 前导码, 时域, 频域, WUS, configuration parameters, PO, preamble, time, frequency

### C. DOCUMENTS CONSIDERED TO BE RELEVANT

| Category* | Citation of document, with indication, where appropriate, of the relevant passages | Relevant to claim No. |
|---|---|---|
| X | CN 112399529 A (HUAWEI TECHNOLOGIES CO., LTD.) 23 February 2021 (2021-02-23) description, paragraphs 49-175 | 1-40 |
| A | CN 113243128 A (GUANGDONG OPPO MOBILE COMMUNICATIONS CO., LTD.) 10 August 2021 (2021-08-10) entire document | 1-40 |
| A | CN 112956256 A (HUAWEI TECHNOLOGIES CO., LTD.) 11 June 2021 (2021-06-11) entire document | 1-40 |
| A | CN 111132280 A (VIVO COMMUNICATION TECHNOLOGY CO., LTD.) 08 May 2020 (2020-05-08) entire document | 1-40 |
| A | WO 2022017360 A1 (VIVO MOBILE COMMUNICATION CO., LTD.) 27 January 2022 (2022-01-27) entire document | 1-40 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 August 2023** | **01 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104625**

| Patent document cited in search report | | | Publication date (day/month/year) | Patent family member(s) | | | Publication date (day/month/year) |
|---|---|---|---|---|---|---|---|
| CN | 112399529 | A | 23 February 2021 | WO | 2021027427 | A1 | 18 February 2021 |
| | | | | US | 2022167273 | A1 | 26 May 2022 |
| | | | | EP | 4017132 | A1 | 22 June 2022 |
| | | | | CN | 115767693 | A | 07 March 2023 |
| CN | 113243128 | A | 10 August 2021 | WO | 2020220239 | A1 | 05 November 2020 |
| | | | | US | 2022022281 | A1 | 20 January 2022 |
| | | | | EP | 3944677 | A1 | 26 January 2022 |
| CN | 112956256 | A | 11 June 2021 | WO | 2020102972 | A1 | 28 May 2020 |
| CN | 111132280 | A | 08 May 2020 | | None | | |
| WO | 2022017360 | A1 | 27 January 2022 | CN | 113965994 | A | 21 January 2022 |

Form PCT/ISA/210 (patent family annex) (July 2022)

**REFERENCES CITED IN THE DESCRIPTION**

**Patent documents cited in the description**

- CN 202210775699